# EUROPEAN PATENT SPECIFICATION

(11) **EP 1 622 979 B1**
(45) Date of publication and mention of the grant of the patent: **09.07.2008**
(21) Application number: 04752523.3
(22) Date of filing: 14.05.2004
(51) Int. Cl.: C08L 67/02, B62D 29/04

(54) **POLYESTER COMPOSITION**
POLYESTERZUSAMMENSETZUNG
COMPOSITION DE POLYESTER

(30) Priority: 15.05.2003 US 470787 P; 03.06.2003 US 475396 P; 04.09.2003 US 500085 P
(43) Date of publication of application: 08.02.2006
(73) Proprietor: E. I. DU PONT DE NEMOURS AND COMPANY, Wilmington, Delaware 19898 (US)
(72) Inventor: ALMS, Gregory, R., Hockessin, Delaware 19707 (US); ANKROM, Linda, S., Marietta, Ohio 45750 (US); BRISSOT, Claire, F - 77370 Nangis (FR); CROFT, Neil, J., Wilmington, Delaware 19810 (US); ELIA, Andri, E., Chadds Ford, Pennsylvania 19317 (US); GRUNER, Christian, 50345 Huerth (DE); MOLITOR, Michael, J., Wilmington, Delaware 19804 (US); STEGEN, Helga, D-42277 Wuppertal (DE)
(74) Representative: Morf, Jan Stefan
(86) International application number: PCT/US2004/015523
(87) International publication number: WO 2004/104099

(56) References cited:
- EP-A2- 0 616 013
- WO-A-96/00752
- WO-A-20/04104100
- US-A- 5 179 152
- US-A- 5 541 259
- US-B1- 6 221 962
- PATENT ABSTRACTS OF JAPAN vol. 1999, no. 04, 30 April 1999 (1999-04-30) & JP 11 012428 A (TECHNO POLYMER KK), 19 January 1999 (1999-01-19)
- DATABASE WPI Section Ch, Week 199506 Derwent Publications Ltd., London, GB; Class A12, AN 1995-041468 XP002295849 & JP 06 322241 A (TOYOBO KK) 22 November 1994 (1994-11-22)

## Description

### Field of the Invention

A polyester composition comprising specified amounts of certain reinforcing agents, liquid crystalline polymer, and a toughening agent is useful for making parts requiring a smooth surface, for instance for automotive body panels and appliance parts such as handles and housings.

### TECHNICAL BACKGROUND

One of the challenges in replacing metal parts with plastics is producing plastic parts with good looking (smooth) surfaces, and/or whose surfaces can be coated (painted) to have a glossy smooth appearance. This, often coupled with the need for certain minimum levels of toughness and/or heat resistance, has presented a challenge, especially in using polymers and other ingredients that are relatively inexpensive. Thermoplastics of various types have been tried in such applications, and have been successfully used in some instances, and have the advantage of being reusable (for example scrap) and often are tougher than thermoset polymers. However in uses where high resistance to two or more environmental stresses are needed, improved compositions are still needed.

For instance, a particularly challenging type of part is an automotive body panel, such as fenders, hoods, doors, lift-up tailgates, trunk lids, tank caps, bumpers, protective moldings, side panels, body sills, mirror housings, handles, spoilers, gas tank flap covers, and hub caps. These parts must be precisely molded to close dimensional tolerances so they will fit properly on the automobile, they must be tough enough to resist mechanical/impact damage, and they must have a very smooth surface so (usually) when they are painted they have a good surface appearance (sometimes called a "Class A" surface). In addition it is preferred that they have enough heat resistance so that they can withstand the temperatures (sometimes as high as 200°C, and for as long as 30 minutes) in an automotive paint bake oven without excessively sagging, warping, or otherwise deforming. While these parts can be painted separately at lower temperatures and then later attached to the body after painting (so called off line painting) such a process adds significant cost to the vehicle assembly process, and it is preferred from an economic standpoint to paint these parts on the regular paint line. Color matching of parts painted in two different processes may be difficult. These parts also need to have a minimum level of stiffness and fatigue resistance to stresses that are repeatedly encountered in normal use.

Other appearance parts may not require this extreme temperature resistance, but often require the other attributes mentioned above.

More particularly for automotive vehicles [passenger cars, trucks, snowmobiles, construction vehicle, farm equipment vehicle (such as a tractor or combine), etc.] external appearance, for example with respect to color tone, gloss and/or short-wave and long-wave structure, the surfaces of the coated plastic parts for the observer should not differ, or should differ only slightly from the coated metal surfaces of a car body. This applies, in particular, to plastic parts, such as fenders, bonnets, boot lids, doors or body sills which are constructed with as small a joint width as possible to and in particular also in the same plane as adjacent metal parts, since visual differences are particularly striking there.

There are three different approaches to the production of coated car bodies assembled from metal and plastic parts in a mixed construction:
1. The method known as the off-line process, in which the metal car body and the plastic parts are coated separately and then assembled.
   The drawback of the off-line process is its susceptibility to lack of visual harmonization of the coated metal and plastic surfaces, at least in cases where coated plastic parts and coated metal parts are subjected to direct visual comparison for reasons of construction, for example, owing to the virtually seamless proximity of the coated parts and/or arrangement of the coated parts in one plane.
   A further drawback is the necessity of operating two coating lines.
2. The method known as the in-line process in which the metal body already provided with an electrodeposition coating as a primer and the uncoated plastic parts or the plastic parts optionally only provided with a plastic primer are assembled and provided with one or more further coating layers in a subsequent common coating process.
   The drawback of the in-line process is the assembly step inserted into the coating process as an interruptive intermediate step which also involves the risk of introducing dirt into the further coating process.
3. The method known as the on-line process, in which the uncoated body parts made of metal and the uncoated plastic parts or the plastic parts optionally only provided with a plastic primer are assembled into a body constructed in a mixed construction and then passed through a common coating process including electrodeposition coating, wherein naturally only the electrically conductive metal parts are provided with an electrodeposition coating, while all the coating layers to be applied subsequently are applied both to the electrodeposition coated metal parts and to the plastic parts.

The on-line process is particularly preferred as it clearly separates the body base shell construction and the coating process and allows an undisturbed coating sequence.

Basically only adequately heat-resistant and simultaneously heat deformation-resistant plastics materials are suitable for the particularly preferred on-line process, since high temperatures are used in the drying of the electrodeposition coating.

Plastic parts made of previously available fiber-reinforced thermoplastics, for example, are at best conditionally suitable, since the coated surfaces do not have an adequate high visual harmonization with the coated metal surfaces and, in particular, are not up to the high standards required by car manufacturers.

U.S. Patent 5,965,655 describes compositions containing thermoplastics such as polyalkylene terephthalates and fillers such as wollastonite having specified particles size ranges which can have "Class A" surfaces. Specific compositions also containing LCPs, and/or plasticizers, and/or toughening agents are not disclosed.

U.S. Patent 6,221,962 describes compositions containing an LCP, a toughening agent with reactive functional groups, and a thermoplastic. The presence of specific compositions containing plasticizers and fillers is not mentioned.

U.S. Patent 4,753,980 describes polyester compositions containing certain toughening agents. The use of LCPs and/or fillers with the present specific size ranges is not mentioned in the patent.

U.S. Patent Re32,334 describes a crystallization initiation system for poly(ethylene terephthalate) (PET) which involves the use of certain compounds containing metal cations and plasticizers for the PET. No mention is made of LCPs, and/or fillers with specific size ranges, in the compositions.

U.S. Patents 4,438,236 and 4,433,083 describe blends of LCPs with various thermoplastics. No specific mention is made of compositions containing polyesters and/or plasticizers and/or fillers which have particular size ranges.

### SUMMARY OF THE INVENTION

This invention concerns a composition, comprising,
(a) at least about 40 weight percent of one or more isotropic polyester (IPE) with a melting point (MP) of about 100°C or more;
(b) about 0.5 to about 20 weight percent of a liquid crystalline polymer (LCP) whose melting point is at least 50°C higher than a cold crystallization point (CCP) of said isotropic polyester, or if said isotropic polyester has no cold crystallization point said melting point of said liquid crystalline polymer is 150°C or higher;
(c) about 1.0 to about 35 weight percent of a reinforcing agent with an average aspect ratio of about 2.0 or more, and whose average longest dimension is 20 µm or less; and
(d) about 3 to about 30 weight percent of a polymeric toughening agent which contains functional groups reactive with said isotropic polyester;
wherein all percents by weight are based on the total of all ingredients in the composition.

This invention also concerns a process for the manufacture of the above composition, wherein said composition additionally comprises at least one or more active ingredients containing functional groups reactive with the functional groups of the polymeric toughening agent and optionally one or more inactive ingredients, comprising:
(a) in a first mixing step mixing materials comprising said isotropic polyester and said polymeric toughening agent to form an intermediate composition; and then
(b) in one or more subsequent mixing steps mixing materials comprising said intermediate composition, and said one or more active ingredients; and
   provided that each of said one or more inactive ingredients are initially mixed in said first mixing step, or one or more of said subsequent mixing steps.

The compositions of this invention described above may also be coated in a process for coating substrates assembled from metal parts and at least one plastic part, with visible metal and plastic composition (above) surfaces, comprising the successive steps of:
(1) electrodeposition coating the substrates, removing non-deposited electrodeposition coating agent from the substrate and thermally cross-linking the deposited electrodeposition coating and thereby forming an electrodeposition coating primer on the metal surfaces,
(2) application and curing of at least one additional coating at least on some or all, preferably all, of the visible metal and plastic surfaces.

These two steps may also be carried out independently of one another.

### DETAILS OF THE INVENTION

Herein certain terms are used, and some of them are defined below.

"Visible substrate surfaces" means outer substrate surfaces which are directly visually accessible, in particular visible to an observer, for example, without the aid of special technical or visual aids.

By a "liquid crystalline polymer" is meant a polymer that is anisotropic when tested using the TOT test or any reasonable variation thereof, as described in U.S. Patent 4, 118, 372. Useful LCPs include polyesters, poly(ester-amides), and poly(ester-imides). One preferred form of polymer is "all aromatic", that is all of the groups in the polymer main chain are aromatic (except for the linking groups such as ester groups), but side groups which are not aromatic may be present.

By "isotropic" herein is meant a polymer which is isotropic when tested by the TOT test, described above. LCPs and isotropic polymers are mutually exclusive species.

By an "IPE" is meant a condensation polymer which is isotropic and in which more than 50 percent of the groups connecting repeat units are ester groups. Thus IPEs may include polyesters, poly(ester-amides) and poly(ester-imides), so long at more than half of the connecting groups are ester groups. Preferably at least 70% of the connecting groups are esters, more preferably at least 90% of the connecting groups are ester, and especially preferably essentially all of the connecting groups are esters. The proportion of ester connecting groups can be estimated to a first approximation by the molar amounts of monomers used to make the IPE.

Unless otherwise noted, melting points are measured by ASTM Method D3418, using a heating rate of 10 °C/min. Melting points are taken as the maximum of the melting endotherm, and are measured on the first heat. If more than one melting point is present the melting point of the polymer is taken as the highest of the melting points. Except for LCPs, a melting point preferably has a heat of fusion of at least 3 J/g associated with that melting point.

Unless otherwise noted average particle sizes are measured by optical microscopy at 700X magnification using computer analysis of the resulting images to calculate the average (sometimes also called the number average) length and width of the particles. The aspect ratio is the ratio of the longest dimension of a particle divided by the shortest dimension of the particle. The average aspect ratio is measured by dividing the average length by the average width of the particles as determined by optical microscopy. Types of particles which may have the requisite aspect ratios include needle-like particles, fibers, fibrids, fibrils, and platy particles.

By a "CCP" is meant a value determined as follows. The "pure" (no other ingredients in the composition except small amounts of materials such as an antioxidant which may be needed to stabilize the IPE in the injection molding process and/or a lubricant needed for improving mold release) IPE is injection molded into a 1.59 mm (1/16") thick plaque using a mold whose temperature is 50°C. An appropriate sized sample (for the instrument) from the plaque is placed in a Differential Scanning Calorimeter and heated from ambient temperature (approximately 20-35°C) at a rate of 10°C/min. The peak of the exotherm from crystallization of the IPE while it is being heated is taken as the CCP. The IPE has no CCP if there is no crystallization exotherm below the melting point of the IPE. Alternatively, the CCP can be determined by the "Quick Quench" method where the sample is fully melted by heating in a DSC pan to above the melting point of the material and immediately cooling the material in the DSC pan by dropping it into a dry/acetone or liquid nitrogen bath. The DSC is then run as above.

By "all percents by weight are based on the total of all ingredients in the composition" is meant that these percent are based on the total amount of (a), (b), (c) and (d) present plus any other ingredients present in the composition.

The IPE used may be any IPE with the requisite melting point. Preferably the melting point of the IPE is about 150°C or higher, more preferably about 200°C or higher, especially preferably about 220°C or higher, and very preferably about 240°C or higher. Polyesters (which have mostly or all ester linking groups) are normally derived from one or more dicarboxylic acids and one or more diols. In one preferred type of IPE the dicarboxylic acids comprise one or more of terephthalic acid, isophthalic acid and 2,6-naphthalene dicarboxylic acid, and the diol component comprises one or more of HO(CH₂)ₙOH (I), 1,4-cyclohexanedimethanol, HO (CH₂CH₂O)ₘCH₂CH₂OH (II), and HO (CH₂CH₂CH₂CH₂O)_{z}CH₂CH₂CH₂CH₂OH (III), wherein n is an integer of 2 to 10, m on average is 1 to 4, and is z an average of about 7 to about 40. Note that (II) and (III) may be a mixture of compounds in which m and z, respectively may vary and hence since m and z are averages, they z do not have to be integers. Other diacids which may be used to form the IPE include sebacic and adipic acids. Other diols include a Dianol® {for example 2,2-bis[4-(2-hydroxyethoxy)phenyl]propane available from Seppic, S.A., 75321 Paris, Cedex 07, France} and bisphenol-A. In preferred polyesters, n is 2, 3 or 4, and/or m is 1.

By a "dicarboxylic acid" in the context of a polymerization process herein is meant the dicarboxylic acid itself or any simple derivative such as a diester which may be used in such a polymerization process. Similarly by a "diol" is meant a diol or any simple derivative thereof which can be used in a polymerization process to form a polyester.

Specific preferred IPEs include poly(ethylene terephthalate) (PET), poly(1,3-propylene terephthalate) (PPT), poly(1,4-butylene terephthalate) (PBT), poly(ethylene 2,6-napthoate), poly(1,4-cylohexyldimethylene terephthalate) (PCT), a thermoplastic elastomeric polyester having poly(1,4-butylene terephthalate) and poly(tetramethyleneether)glycol blocks (available as Hytrel® from E. I. DuPont de Nemours & Co., Inc., Wilmington, DE 19898 USA) and copolymers of any of these polymers with any of the above mentioned diols and/or dicarboxylic acids. If more than one IPE (with the proper melting points) are present, the total of such polymers in the composition is taken as component (a). Preferably the composition contains at least about 50 weight percent component (a). If a blend of 2 or more IPEs is used, it is preferred that the IPE "fraction" of the polymer has at least one melting point which is 150°C or more (depending on mixing conditions, if two or more IPEs are used, transesterification may take place).

Component (c) the reinforcing agent, has an average aspect ratio of about 2.0 or more, preferably about 2.5 or more, more preferably about 3.0 or more, and especially preferably about 4.0 or more. Oftentimes as the aspect ratio of the particles increases, the heat sag (see below) decreases and stiffness increases. The average maximum dimension is about 20 µm or less, more preferably about 15 µm or less, very preferably about 10 µm or less. A preferred minimum average longest dimension is about 0.10 µm or more, more preferably about 0.5 µm or more. Preferably less than 10% of the particles have a longest dimension of about 100 µm or more, more preferably less than 5%. Any of these ratios or dimensions may be combined with any other ratios or dimensions of the reinforcing agent, as appropriate. Surface smoothness is often improved is the particle size of the reinforcing agent is towards the small end of the range.

Useful specific reinforcing agents for component (c) include wollastonite, mica, talc, aramid fibers, fibrils or fibrids, carbon fibers, potassium titanate whiskers, boron nitride whiskers, aluminum borate whiskers, magnesium sulfate whiskers and calcium carbonate whiskers. Preferred reinforcing fillers are wollastonite, mica, talc, potassium titanate whiskers, boron nitride whiskers and aluminum borate whiskers, and especially preferred reinforcing agents are wollastonite, talc and potassium titanate whiskers. All of these specific reinforcing agents should have the appropriate dimensions as outlined above. These reinforcing agents may be coated with adhesion promoters or other materials which are commonly used to coat reinforcing agents used in thermoplastics.

Preferably the amount of reinforcing agent (c) is about 3 to about 30 weight percent of the composition, more preferably about 5 to 20 weight percent. Generally speaking the more reinforcing agent (c) in the composition the stiffer the composition will be, in many cases the heat sag (see below) will be decreased, and sometimes the surface will be rougher.

Any LCP [component (b)] may be used in this composition as long as the melting point requirement is met. Suitable LCPs, for example, are described in U.S. Patents 3,991,013, 3,991,014 4,011,199, 4,048,148, 4,075,262, 4,083,829, 4,118, 372, 4,122,070, 4,130,545, 4,153,779, 4,159,365, 4,161,470, 4,169,933, 4,184,996, 4,189,549, 4,219,461, 4,232,143, 4,232,144, 4,245,082, 4,256,624, 4,269,965, 4,272,625, 4,370,466, 4,383,105, 4, 447, 592, 4, 522, 974, 4,617,369, 4,664,972, 4, 684, 712, 4,727,129, 4,727,131, 4,728,714, 4,749,769, 4,762,907, 4,778,927, 4,816,555, 4,849,499, 4,851,496, 4,851,497, 4, 857, 626, 4,864,013, 4, 868, 278, 4,882,410, 4,923,947, 4,999,416, 5,015,721, 5,015,722, 5,025,082, 5,086,158, 5,102,935, 5,110,896, and 5,143,956, and European Patent Application 356,226. In many instances it is preferred that the LCP used have a relatively high melting point, preferably above about 250°C, more preferably above about 300°C, even more preferably above about 325°C, and even more preferably above about 350°C. The melting point of the LCP should not be so high however so that the temperature needed for forming and melt processing the composition will cause significant degradation of the IPE used. By significant degradation in this instance is meant sufficient degradation to cause the composition to be unsuited for the intended use.

The composition contains about 0.5 to about 20 weight percent of the LCP, preferably about 1.0 to about 15 weight percent, and more preferably about 2.0 to about 10 weight percent. Generally speaking, as the amount of LCP is increased, heat sag is lowered, and stiffness is increased, usually without significantly affecting surface appearance. It has also surprisingly been found that even if the melting points of a group of LCPs are well above the temperature of the heat sag test, the higher the melting point of the LCP, generally the lower (better) the heat sag is. It has also been observed that in many compositions the presence of an LCP improves the color stability of the composition, compared to a similar composition without LCP.

The polymeric toughening agent (component D) is a polymer, typically which is an elastomer or has a relatively low melting point, generally <200°C, preferably <150°C, which has attached to it functional groups which can react with the IPE. Since IPEs usually have carboxyl and hydroxyl groups present, these functional groups usually can react with carboxyl and/or hydroxyl groups. Examples of such functional groups include epoxy, carboxylic anhydride, hydroxyl (alcohol), carboxyl, isocyanato, and primary or secondary amino. Preferred functional groups are epoxy and carboxylic anhydride, and epoxy is especially preferred. Such functional groups are usually "attached" to the polymeric toughening agent by grafting small molecules onto an already existing polymer or by copolymerizing a monomer containing the desired functional group when the polymeric tougher molecules are made by copolymerization. As an example of grafting, maleic anhydride may be grafted onto a hydrocarbon rubber using free radical grafting techniques. The resulting grafted polymer has carboxylic anhydride and/or carboxyl groups attached to it. An example of a polymeric toughening agent wherein the functional groups are copolymerized into the polymer is a copolymer of ethylene and a (meth)acrylate monomer containing the appropriate functional group. By (meth)acrylate herein is meant the compound may be either an acrylate, a methacrylate, or a mixture of the two. Useful (meth)acrylate functional compounds include (meth)acrylic acid, 2-hydroxyethyl(meth)acrylate, glycidyl(meth)acrylate, and 2-isocyanatoethyl (meth)acrylate. In addition to ethylene and a difunctional (meth)acrylate monomer, other monomers may be copolymerized into such a polymer, such as vinyl acetate, unfunctionalized (meth)acrylate esters such as ethyl (meth)acrylate, n-butyl (meth)acrylate, and cyclohexyl (meth)acrylate. Preferred tougheners include those listed in U.S. Patent 4,753,980. Especially preferred tougheners are copolymers of ethylene, ethyl acrylate or n-butyl acrylate, and glycidyl methacrylate.

It is preferred that the polymeric toughener contain about 0.5 to about 20 weight percent of monomers containing functional groups, preferably about 1.0 to about 15 weight percent, more preferably about 7 to about 13 weight percent of monomers containing functional groups. There may be more than one type of functional monomer present in the polymeric toughener. It has been found that toughness of the composition is increased by increasing the amount of polymeric toughener and/or the amount of functional groups. However, these amounts should preferably not be increased to the point that the composition may crosslink, especially before the final part shape is attained. Preferably there is about 5 to about 25 weight percent of the polymeric toughener in the composition, more preferably about 10 to about 20 weight percent. A mixture of 2 or more polymeric tougheners may be used in the same composition. At least one must contain reactive functional groups, but the other(s) may or may not contain such functional groups. For instance, tougheners which do not contain functional groups include ethylene-n-butyl acrylate copolymer, ethylene/n-butyl acrylate/carbon monoxide copolymer and a plastomeric polyethylene such as Engage® 8180 (an ethylene/1-octene copolymer) or Engage® 7447 (an ethylene/1-butene copolymer), available from the DuPont-Dow Elastomers, Wilmington, DE USA.

Other ingredients may also be present in the composition, particularly those that are commonly added to thermoplastic compositions. Such ingredients include antioxidants, pigments, fillers, lubricant, mold release, flame retardants, (paint) adhesion promoters, epoxy compounds, crystallization nucleation agents, plasticizers, etc. Other polymers such as polyolefins, polyamides, and amorphous polymers such as polycarbonates, styrene (co)polymers and poly(phenylene oxides) may also be present. Preferably the total of all these ingredients is less than about 60 weight percent, very preferably less than about 40 weight percent, more preferably less than about 25 weight percent of the total composition. If any of these materials is a solid particulate material, it is preferred that the average longest dimensions of the particles is about 20 µm or less, more preferably about 15 µm or less. A preferred other ingredient is a plasticizer for the IPE, particularly when PET is present as an IPE, preferably present in an amount of about 0.5 to about 8 weight percent of total composition.

A preferred type of other ingredient is an epoxy compounds or resin. Preferably such a compound or resin has an average molecular weight of less than about 1000 (the polymeric toughening agent as described above, even if it does contain epoxy groups, is not considered herein part of this epoxy compound or resin). This epoxy material is preferably present at a level of 0.1 to about 1.0 weight percent of the entire composition. Useful epoxy compounds or resins include Epon® 1009F, 1002F or 1031 or Araldite® GT7099 or GT6099. It is believed that in some instance the epoxy compound or resin stabilizes melt viscosity and/or improves color stability of the composition. The latter is particularly important when an appearance part is not coated a paint or other coating.

Another way of classifying "other ingredients" is whether these ingredients contain functional groups which readily react (particularly under mixing conditions) with the functional groups of the polymeric toughening agent, component D. Ingredients, particularly "other ingredients" containing complimentary reactive functional groups, are termed "active ingredients" (or "inactive ingredients" if they don't contain such reactive groups) herein. The Table below gives a partial listing of "reactive groups" which may be part of Component D, together with complimentary reactive groups which may be part of active ingredients.

| Reactive Group | Complimentary Groups |
|---|---|
| | |
| epoxy | Carboxyl, hydroxyl, amino |
| carboxylic anhydride | Hydroxyl, amino |
| amino | Carboxyl, hydroxyl, epoxy, chloro |
| isocyanato | Carboxyl, hydroxyl, amino |
| hydroxyl | Carboxyl, carboxylic anhydride, epoxy |
| chloro, bromo | Amino |

Not included in active ingredients, and so are inactive ingredients, are polymers having a number average molecular weight of about 5,000 or more, preferably about 10,000 or more, and some or all of whose complimentary end groups may be reactive (with the functional groups of the polymeric toughener). Polymers having reactive groups which are not end groups, and which may or may not have reactive end groups, are active ingredients.

In one preferred type of composition less than 25 ppm, preferably less than 10 ppm (based on the IPE present) of "free" metal cations such as alkali metal or alkaline earth metal cations are added to the composition. By "free" metal cations are meant cations which may readily react with functional groups which are present in the composition, such as carboxyl groups to form carboxylate salts. Free metal cations may be added as carboxylate salts such as acetates or 4-hydroxybenzoates, as other metal salts such as metal halides, and as metal salts of polymeric carboxylates. Not included in added free metal cations are normal impurities in the other ingredients or metal cations which are part of minerals or other compounds, wherein the metal cations are tightly bound to that ingredient or mineral.

Another preferred ingredient is a lubricant, sometimes called a mold release or release agent. Typically about 0.05 to about 1.0 weight percent (of the total composition) of lubricant is used. Many types of materials are sold as lubricants, and in the present compositions due regard should especially be given to their effects on mold release and paint adhesion (assuming the part is to be painted), as well as other physical properties. Lubricants may be active or inactive ingredients. For instance one type of preferred lubricant is polyethylene wax, a polyethylene usually having a number average molecular weight of about 1,000 to about 10,000. The end groups on these waxes may be nonpolar (for instance methyl ends), or may comprise polar groups, for instance carboxyl groups. The carboxyl ended waxes will, with polymeric tougheners having appropriate reactive groups, be considered reactive ingredients (when their molecular weights are below about 5000). Such waxes are commercially available, see for *instance* the Licowax® brand product line, available from Clariant Corp., Charlotte, NC 28205, USA. In some compositions inactive lubricants such as Licowax® PE 520 or PE 190 are preferred. However lubricants such as Licowax® PED 521 or PED 191, which are also active ingredients, can also be used. Another useful (type of) lubricant is Loxoil® HOB7119, penterythritol tetrastearate.

The compositions described herein can be made by typical melt mixing techniques. For instance the ingredients may be added to a single or twin screw extruder or a kneader and mixed in the normal manner. Preferably the temperature of the ingredients in at least part of the mixing apparatus is at or above the melting point of the LCP present (the measured or set temperature in any zone of the mixing apparatus may be below the actual material temperature because of mechanical heating). Some of the ingredients such as fillers, plasticizers, crystallization nucleating agents, and lubricants (mold release) may be added at one or more downstream points in the extruder, so as to decrease attrition of solids such as fillers, and/or improve dispersion, and/or decrease the thermal history of relatively thermally unstable ingredients, and/or reduce loss of volatile ingredients by vaporization. After the materials are mixed they may be formed (cut) into pellets or other particles suitable for feeding to a melt forming machine. Melt forming can be carried out by the usual methods for thermoplastics, such as injection molding, thermoforming, extrusion, blow molding, or any combination of these methods.

When one or more "active ingredients" are present in the composition, a particular variation of the above mixing procedure is preferred. In this variation, the IPE, optionally, and preferably, the LCP, and polymeric toughening agent, and optionally additional inactive ingredients are mixed is a first mixing step, and any reactive ingredients and optionally inactive ingredients, as described above, are mixed into the intermediate composition containing the IPE in one or more subsequent mixing steps. This can be accomplished in a number of different ways. For instance, the first mixing step can be carried out in a single pass thorough a single or twin screw extruder or other type of mixing apparatus, and then the other ingredients are added during a second pass through a single or twin screw extruder or other mixing apparatus. Alternatively, the first mixing step is carried out in the "back end" (feed end) of a single or twin screw extruder or similar device and then the materials to be added for the second mixing step are added somewhere downstream to the barrel of the extruder, thereby mixing in the materials for the second mixing step. The added materials for the second mixing step may be added by a so-called "side feeder" or "vertical feeder" and/or if liquid by a melt pump. More than one side feeder may be used to introduce different ingredients. As noted above it may be preferable to add inactive ingredients in side and/or vertical feeders for other reasons. The use of an extruder with one or more side and/or vertical feeders is a preferred method of carrying out the first and second mixing steps. If an inactive lubricant is used, it is also preferred that it be added in the second mixing step. If two or more mixing passes are done, the machine(s) for these passes may be the same or different (types).

It has also been found that the mixing intensity [for example as measured by extruder speed (rpm)] may affect the properties of the composition especially toughness. While relatively higher rpm are preferred, the toughness may decrease at too high a mixer rotor speed: The optimum mixing intensity depends on the configuration of the mixer, the temperatures, compositions, etc. being mixed, and is readily determined by simple experimentation.

The compositions described herein are particularly useful as "appearance parts", that is parts in which the surface appearance is important. This is applicable whether the composition's surface is viewed directly, or whether it is coated with paint or another material such as a metal. Such parts include automotive body panels such as fenders, fascia, hoods, tank flaps and other exterior parts; interior automotive panels; appliance parts such as handles, control panels, chassises (cases), washing machine tubs and exterior parts, interior or exterior refrigerator panels, and dishwasher front or interior panels; power tool housings such as drills and saws; electronic cabinets and housings such as personal computer housings, printer housings, peripheral housings, server housings; exterior and interior panels for vehicles such as trains, tractors, lawn mower decks, trucks, snowmobiles (especially snowmobile hoods), aircraft, and ships; decorative interior panels for buildings; furniture such as office and/or home chairs and tables; and telephones and other telephone equipment. As mentioned above these parts may be painted or they may be left unpainted in the color of the composition.

The present invention also relates to an automobile, truck, snowmobile, construction vehicle or farm equipment vehicle comprising the inventive composition, preferably as a coating.

The composition may be colored with pigments and/or dyes, so many color variations are possible. This type of coloration of parts made from the composition is particularly attractive economically, since such parts need not be subsequently coated (painted) in one or more additional steps. If extremely high gloss and/or distinctness of image are not needed, this is often a better overall alternative to coating.

Another method of applying a coating (which may be colored) to the surface is a dye sublimation (printing) process.

Automotive (transportation) body panels are an especially challenging application. As mentioned above, these materials should preferably have smooth and reproducible appearance surfaces, be heat resistant so they can pass through without significant distortion automotive E-coat and paint ovens where temperatures may reach as high as about 200°C for up to 30 minutes for each step, be tough enough to resist denting or other mechanical damage from minor impacts. It has been particularly difficult to obtain compositions which have good toughness yet retain good heat resistance and excellent surface appearance, because generally speaking when one of the properties is improved, another deteriorates. In the present composition, good heat resistance and good toughness may be achieved, as illustrated in some of the Examples herein.

Heat resistance is commonly measured for this use by a heat sag test. In this test sample, which is suspended in a cantilever fashion, is heated to a test temperature for a given amount of time, and the amount the part has sagged is measured after cooling to room temperature. The lower the value, the better the heat sag. In the present composition, improved (lowered) heat sag is favored by a higher melting point of the IPE and/or LCP, lower toughener content, higher LCP content and higher reinforcing filler content. On the other hand toughness is improved (raised) by higher toughener content, lower reinforcing filler content, lower LCP content, higher functional group content in the toughener (within limits). As mentioned above the present composition often gives wide latitude to obtaining a material which has the requisite properties for an automotive body panel or other parts.

In the coating processes, according to the invention, preferably substrates assembled from metal parts and at least one plastic part as defined herein in a mixed construction, in particular, car bodies, are coated, at least in part, and preferably completely.

The metal parts can be parts made from a variety of metals, for example, of galvanized or ungalvanized steel, aluminum and aluminum alloys, magnesium and magnesium alloys. The metal parts may be pretreated or not, for example, may have been conventionally phosphatized and/or passivated.

The plastic parts may be pretreated in a conventional manner, for example, by UV irradiation, flame treatment or plasma treatment or be coated with a conventional plastic primer known to the person skilled in the art, in particular, a conductive primer providing the plastic part with adequate electrical conductivity for electrostatically-assisted coatability, before they are assembled with the metal parts.

The metal parts and the at least one plastic part optionally provided with a plastic primer are assembled in the conventional manner known to the person skilled in the art, for example by screwing, clipping and/or adhesion, to form the substrate to be coated by the process according to the invention.

At least that (those) plastic part(s) of a substrate with the smallest possible joint width and in particular also in the same plane as the adjacent metal parts is (are) assembled with the metal parts.

Optionally, further still missing plastic parts, if any, which in general will differ in composition from the at least one plastic part and which in general are less resistant to heat deformation can be fitted on after completion of step (1) of the process according to the invention and can also be subjected to the further coating process of step (2) (compare the in-line process described above) and/or be fitted on after completion of the process according to the invention in finished coated form (compare the off-line process described above).

In view of the application of at least one further coating layer, taking place in step (2) of the process according to the invention, preferably by electrostatically-assisted spray coating, it is expedient if the metal and plastic part(s) are assembled such that that they are not electrically insulated from one another; for example a direct electric contact between the conductive primer and metal can be ensured by direct contact or via electrically conductive connecting elements, for example metal screws.

To produce an anti-corrosive primer layer on the metal parts, the substrates assembled from metal parts and at least one plastic part in step (1) of the process according to the invention are coated in an electrodeposition coating bath in the conventional manner known to the person skilled in the art.

Suitable electrodeposition coating agents include conventional waterborne coating compositions with a solids content from, for example, 10 to 30 wt. percent.

The electrodeposition coating compositions may be conventional anodic electrodeposition coating agents known to the skilled person. The binder basis of the anodic electrodeposition coating compositions may be chosen at will. Examples of anodic electrodeposition binders are polyesters, epoxy resin esters, (meth)acrylic copolymer resins, maleinate oils or polybutadiene oils with a weight average molecular mass (Mw) of, for example, 300-10 000 and a carboxyl group content, for example, corresponding to an acid value of 35 to 300 mg KOH/g. At least a part of the carboxyl groups is converted to carboxylate groups by neutralization with bases. These binders may be self cross-linking or crosslinked with separate cross-linking agents.

Preferably conventional cathodic electrodeposition coating agents known to the skilled person are used in the process according to the invention for the application of the electrodeposition coating layer. Cathodic electrodeposition coating compositions contain binders with cationic groups or groups which can be converted to cationic groups, for example, basic groups. Examples include amino, ammonium, e.g., quaternary ammonium, phosphonium and/or sulfonium groups. Nitrogen-containing basic groups are preferred; said groups may be present in the quaternized form or they are converted to cationic groups with a conventional neutralizing agent, e.g., an organic monocarboxylic acid such as, e.g., formic acid, lactic acid, methane sulfonic acid or acetic acid. Examples of basic resins are those with primary, secondary and/or tertiary amino groups corresponding to an amine value from, for example, 20 to 200 mg KOH/g. The weight average molecular mass (Mw) of the binders is preferably 300 to 10,000. Examples of such binders are amino(meth)acrylic resins, aminoepoxy resins, aminoepoxy resins with terminal double bonds, aminoepoxy resins with primary OH groups, aminopolyurethane resins, amino group-containing polybutadiene resins or modified epoxy resin-carbon dioxide-amine reaction products. These binders may be self-cross-linking or they may be used with known cross-linking agents in the mixture. Examples of such cross-linking agents include aminoplastic resins, blocked polyisocyanates, cross-linking agents with terminal double bonds, polyepoxy compounds or cross-linking agents containing groups capable of transesterification.

Apart from binders and any separate cross-linking agents, the electrodeposition coating compositions may contain pigments, fillers and/or conventional coating additives. Examples of suitable pigments include conventional inorganic and/or organic colored pigments and/or fillers, such as carbon black, titanium dioxide, iron oxide pigments, phthalocyanine pigments, quinacridone pigments, kaolin, talc or silicon dioxide. Examples of additives include, in particular, wetting agents, neutralizing agents, leveling agents, catalysts, corrosion inhibitors, anti-cratering agents, anti-foaming agents, solvents.

Electrodeposition coating takes place in a conventional manner known to the skilled person, for example, at deposition voltages from 200 to 500 V. After deposition of the electrodeposition coating, the substrate is cleaned from excess and adhering but non-deposited electrodeposition coating in a conventional manner known to the skilled person, for example, by rinsing with water. Thereafter the substrate is baked at oven temperatures of, for example, up to 220°C according to object temperatures of, for example, up to 200°C in order to crosslink the electrodeposition coating.

In the subsequent step (2) of the process according to the invention, at least one further coating layer is applied, preferably by spray application, in particular electrostatically-assisted spray application, at least to all the visible metal and plastic surfaces on the substrates thus obtained and only provided with a baked electrodeposition coating layer on the metal surfaces.

If only one further coating layer is applied, this is generally a pigmented top coat. However, it is preferred to apply more than one further coating layer. Examples of conventional multicoat constructions formed from a plurality of coating layers are:
- primer surfacer/top coat.
- primer surfacer/base coat/clear coat,
- base coat/clear coat,
- primer surfacer substitute layer/base coat/clear coat.

Primer surfacers or primer surfacer substitute coatings are mainly used for stone-chip protection and surface leveling and prepare the surface for the subsequent decorative top coat which provides protection against environmental influences and is made of pigmented top coat or of color- and/or effect-producing base coat and protective clear coat.

The multicoat constructions mentioned by way of example may also be provided over the entire surface or part of the surface with a transparent sealing coat, in particular providing high scratch-resistance.

All these coating layers following the electrodeposition coating layer may be applied from conventional coating agents well known to the person skilled in the art for applying the relevant coating layer. This can be a respective liquid coating agent containing, for example, water and/or organic solvents as diluents or a powder coating agent. The coating agents may be a single-component or multi-component coating agent; they may be physically drying or by oxidation or be chemically crosslinkable. In particular, primer surfacers, top coats, clear coats and sealing coats these are generally chemically cross-linking systems which can be cured thermally (by convection and/or by infrared irradiation) and/or by the action of energy-rich radiation, in particular ultraviolet radiation.

If more than one coating layer is applied in step (2) of the process according to the invention, the coating layers do not basically have to be cured separately prior to application of the respective subsequent coating layer. Rather, the coating layer can be applied according to the wet-on-wet principle known to the person skilled in the art, wherein at least two coating layers are cured together. In particular, for example, in the case of base coat and clear coat, following the application of the base coat, optionally followed by a short flash-off phase, the clear coat is applied and cured together with the base coat.

The on-line process according to the invention allows substrates assembled in a mixed construction from metal parts and plastic parts which are based on thermoplastics and are adequately resistant to heat deformation to be coated with excellent harmonization of the visual impression of the coated plastic and metal surfaces.

Moreover, the present invention pertains to a process for coating substrates assembled from metal parts and at least one plastic part, with visible metal and plastic surfaces, comprising, electrodeposition coating the substrates, removing non-deposited electrodeposition coating agent from the substrate and thermally cross-linking the deposited electrodeposition coating and thereby forming an electrodeposition coating primer on the metal surfaces;
and provided that at least some of the plastic parts make up the visible plastic surfaces of the substrate, and at least some of the plastic parts have a composition which comprises:
(a) at least about 40 weight percent of at least one isotropic polyester with a melting point of about 100°C or more;
(b) about 0.5 to about 20 weight percent of a liquid crystalline polymer having a melting point that is at least 50°C higher than a cold crystallization point of said isotropic polyester, or if said isotropic polyester has no cold crystallization point said melting point of said liquid crystalline polymer is 150°C or higher;
(c) about 1.0 to about 35 weight percent of a reinforcing agent with an average aspect ratio of about 2.0 or more, and whose average longest dimension is 20 µm or less; and
(d) about 3 to about 30 weight percent of a polymeric toughening agent which contains functional groups reactive with said isotropic polyester;
wherein all percents by weight are based on the total of all ingredients in the composition. Moreover, part of the present invention is a process for coating substrates assembled from metal parts and at least one plastic part, with visible metal and plastic surfaces, comprising application and curing of at least one coating at least on all the visible metal and plastic surfaces;
provided that at least some of the plastic parts make up the visible plastic surfaces of the substrate, and at least some of the plastic parts have a composition which comprises:
(a) at least about 40 weight percent of at least one isotropic polyester with a melting point of about 100°C or more;
(b) about 0.5 to about 20 weight percent of a liquid crystalline polymer having a melting point that is at least 50°C higher than a cold crystallization point of said isotropic polyester, or if said isotropic polyester has no cold crystallization point said melting point of said liquid crystalline polymer is 150°C or higher;
(c) about 1-0 to about 35 weight percent of a reinforcing agent with an average aspect ratio of about 2.0 or more, and whose average longest dimension is 20 µm or less; and
(d) about 3 to about 30 weight percent of a polymeric toughening agent which contains functional groups reactive with said isotropic polyester;
wherein all percents by weight are based on the total of all ingredients in the composition.

Preferably, the coated substrates are car bodies. Moreover, the present invention relates to coated substrates which are coated according to the inventive process, in particular to vehicles.

Surface quality can be judged by a variety of methods. One is simply visual, observing the smoothness and the reflectivity of the surface, and how accurately it reflects its surroundings. Another more systematic method is DOI. It is preferred that the appearance surfaces (those that need to be smooth, etc.) have a DOI of about 65 or more, more preferably about 70 or more, when measured using the AutoSpect® Paint Appearance Quality Measurement system. It is understood by the artisan that factors other than the composition itself can affect the surface quality of a part produced. For example the condition (porosity, flatness) of the mold surface, molding conditions such as fill time and fill pressure, mold design such as gate location and thickness of the part, mold and melt temperatures, and other factors can affect surface quality. If painted, the surface quality also depends on the painting technique used and the quality of the paint which is applied.

### TEST METHODS

DOI This measurement was made using the AutoSpect Paint Appearance Quality Measurement System (QMS), available from Perceptron, Plymouth, MI 48170, USA. Painted and unpainted surfaces may be measured with this system.

Sag test A standard ASTM 20.3 cm (8") long, 0.32 cm (1/8") thick, tensile bar is clamped horizontally at one end in a cantilever fashion in a metal holder so that bar has a 15.2 cm (6") over hang from the clamp. The bar in the holder is heated in a 200°C for 30 min, and the distance (in mm) the end of the bar has sagged downward is measured after cooling to room temperature.

Instrument Impact Test This test measures the force vs. time as a weighted 1.27 cm (½") diameter hemispherical tipped tup weighing 7.3 kg (16 pound) is dropped from 1.09 m through a 0.32 cm (1/8") thick molded plaque. This gives a nominal tup speed of 4.5 m/sec when striking the plaque. The plaque is clamped on the top and bottom surfaces, both sides of the clamp having colinear 3.81 cm (1.5") diameter holes, and the tup strikes the plaque in the center of these holes. An accelerometer is attached to the tup and the force during the impact is recorded digitally. The maximum force and total energy to break are calculated from the data. The data reported are the average of three determinations.

A similar instrument, the Ceast® Dart Tester (Ceast S.p.a.), was also used to measure dart impact. The data reported are the average of three determinations.

Tensile modulus, strength and elongation Measured using ASTM Method D256 at an extension rate of 5.08 cm (2") per minute.

Flexural modulus (three point) Measured using ASTM Method D790.

Melting point Determined by ASTM D3418-82, at a heating rate of 10°C/min. The peak of the melting endotherm is taken as the melting point. Melting points of LCPs are taken on the second heat.

### Compounding and Molding Methods

Compounding Method A Polymeric compositions were prepared by compounding in 30 mm Werner and Pfleiderer twin screw extruder. All ingredients were blended together and added to the rear (barrel 1) of the extruder except that Nyglos® and other minerals were side-fed into barrel 5 (of 10 barrels) and the plasticizer was added using a liquid injection pump. Any exceptions to this method are noted in the examples. Barrel temperatures were set at 280-310°C resulting in melt temperatures 290-350°C depending on the composition and extruder rate and rpm of the screw.

Compounding Method B This was the same as Method A except a 40 mm Werner and Pfleiderer twin screw extruder was used. The side-fed materials were fed into barrel 6 (of 10 barrels).

Resins were molded into ASTM test specimens on a 3 or 6 oz injection molding machine. Melt temperature were 280-300°C, mold temperatures were 110-130°C.

In the Examples certain ingredients are used, and they are defined below:
3GT - poly(1,3-propylene terephthalate)
Americhem® 1859 R3 - a concentrate of 40% carbon black in PET copolyester from Americhem, Inc., Cuyahoga Fall, OH 44221, USA
Crastin® 6155 - A terephthalic acid, adipic acid, and 1,4-butanediol copolymer available from E. I DuPont de Nemours & Co., Inc, Wilmington, DE 19898, USA
Crastin® 6129 - A poly(1,4-butylene terephthalate) polymer with an inherent viscosity of about 1.2 available from E. I DuPont de Nemours & Co., Inc, Wilmington, DE 19898, USA.
Crystar® 1906 - A PET copolymer, inherent viscosity (IV) 0.65, copolymerized with about 12 mole percent poly(ethylene oxide) available from E. I DuPont de Nemours & Co., Inc, Wilmington, DE 19898, USA
Crystar® 3934 - PET homopolymer, IV = 0.67, available from E. I. DuPont de Nemours & Co., Inc., Wilmington, DE 19898 USA
Hostamont® NAV 101 - sodium montanate available from Clariant Corp. D-65840 Sulzbach am Taunns, Germany
Hytrel® 5556 - a thermoplastic elastomeric polyester having poly(1,4-butylene terephthalate) and poly(tetramethyleneether)glycol blocks available from E. I. DuPont de Nemours & Co., Inc., Wilmington, DE 19898 USA
Irganox® 1010 - antioxidant available from Ciba Specialty Chemicals, Tarrytown, NY 10591, USA.
LCP1 - 50/50/87.5/12.5/320 (molar parts) hydroquinone/4,4'-biphenol/terephthalic acid/2,6-napthalene dicarboxylic acid/4-hydroxybenzoic acid copolymer, containing about 25 ppm potassium cation, melting point 360°C.
LCP2 - 100/33/34/33/300 (molar parts) hydroquinone/terephthalic acid/isophthalic acid/2,6-naphthalene dicarboxylic acid/4-hydroxybenzoic acid copolymer, melting point 325°C.
LCP3 - 100/70/30/250 (molar parts) hydroquinone/isophthalic acid/2,6-naphthalene dicarboxylic acid/4-hydroxybenzoic acid copolymer, melting point 270°C.
LCP4 - 50/50/70/30/270/50 (molar parts) hydroquinone/terephthalic acid/isophthalic acid/2,6-naphthalene dicarboxylic acid/4-hydroxybenzoic acid/6-hydroxy-2-napthoic acid copolymer, melting point melting point 230°C.
LCP5 - 50/50/70/30/320 (molar parts) hydroquinone/4,4'-biphenol/terephthalic acid/2,6-napthalene dicarboxylic acid/4-hydroxybenzoic acid copolymer, melting point 334°C.
Licowax® PE 520 - a polyethylene wax used as a mold lubricant available from Clariant Corp. Charlotte, NC 28205, USA. It is reported to have an acid value of 0 mg KOH/g wax.
Licowax® PED 521 - an oxidized polyethylene wax used as a mold lubricant available from Clariant Corp. Charlotte, NC 28205, USA. It is reported to have an acid value of about 18 mg KOH/g wax.
Nyglos® 4 - average approximately 9 µm length wollastonite fibers with no sizing available from Nyco Minerals, Calgary, AB, Canada.
Nyglos® 4W 20544 - average approximately 10 µm length sized wollastonite fibers, available from Nyco Minerals, Calgary, AB, Canada.
PEN - poly(ethylene 2,6-napthoate).
Plasthall® 809 - polyethylene glycol 400 di-2-ethylhexanoate.
Polymer A - ethylene/n-butyl acrylate/glycidyl methacrylate (66.75/28/5.25 wt. %) copolymer, melt index 12 g/10 min.
Polymer B - ethylene/n-butyl acrylate/carbon monoxide (57/33/10 wt. %) copolymer, melt index 12 g/10 min.
Polymer C - ethylene/n-butyl acrylate (73/27 wt. %) copolymer, melt index 4 g/10 min.
Polymer D - ethylene/n-butyl acrylate/glycidyl methacrylate (66/22/12 wt. %) copolymer, melt index 8 g/10 min.
Polymer E - ethylene/n-butyl acrylate/glycidyl methacrylate (72.6/26/1.4 wt. %) copolymer, melt index 15 g/10 min.
Polymer F - ethylene/n-butyl acrylate/glycidyl methacrylate (66.75/28/5.25 wt. %) copolymer, melt index 12 g/10 min.
Polymer G - ethylene/n-butyl acrylate/glycidyl methacrylate (63/20/17 wt. %) copolymer, melt index 14 g/10 min.
Surlyn® 8920 - ethylene/methacrylic acid (85/15 wt. %) copolymer, neutralized with sodium, melt index 0.9 g/10 min, available from E. I. DuPont de Nemours & Co., Inc, Wilmington, DE 19898, USA.
Teflon® TE9050 - A powdered copolymer of tetrafluoroethylene and hexafluoropropylene, available from E. I. DuPont de Nemours & Co., Inc, Wilmington, DE 19898, USA.
Thermx® 13787 - A poly(1,4-cyclohexyldimethylene terephthalate) available from Eastman Chemicals, Inc., Kingsport, TN, USA.
Ultranox® 626 - an antioxidant, bis(2,4-di-t-butylphenyl)penterythritol diphosphite, available from GE Specialty Chemicals, Inc., Morgantown, WV 26501 USA.
Uniplex® 810 - a plasticizer which is poly(ethylene glycol) dilaurate with an average molecular weight of 946 available from Unitex Chemical Corp., Greensboro, NC 27406, USA.

In the Examples, all compositional amounts shown are parts by weight.

### Examples 1-4

The compositions listed in Table 1 were made up by Compounding Method A. Plaques (7.6x12.7 cm, 3"x 5") were injection molded, then primed and spray painted in a lab test that simulates an automotive paint line. Heat sag and DOI were measured. The DOI of a steel plaque was 73.5. The heat sag and DOI data are shown in Table 1. The heat sag was observed to decrease as the melting point of the LCP component increased.

**Table 1**

| Example | 1 | 2 | 3 | 4 |
|---|---|---|---|---|
| | | | | |
| Crystar® 3934 | 49.1 | 49.1 | 49.1 | 49.1 |
| Surlyn® 8320 | 3.5 | 3.5 | 3.5 | 3.5 |
| LCP1 | 10 | | | |
| LCP2 | | 10 | | |
| LCP3 | | | 10 | |
| LCP4 | | | | 10 |
| Americhem® 18589 R3 | 3.9 | 3.9 | 3.9 | 3.9 |
| Irganox® 1010 | 0.3 | 0.3 | 0.3 | 0.3 |
| Licowax® PED521 | 0.2 | 0.2 | 0.2 | 0.2 |
| Polymer A | 10 | 10 | 10 | 10 |
| Nyglos® 4 | 20 | 20 | 20 | 20 |
| Plasthall® 809 | 3 | 3 | 3 | 3 |
| | | | | |
| Sag, mm | 9.11 | 11.7 | 19.38 | 15.48 |
| QMS DOI | 64.8 | 79.9 | 77.6 | 72.8 |

### Comparative Example A

The composition shown in Table 2 was prepared by Compounding Method A and was molded into plaques (7.6x15.2 cm, 3"x6"), then primed and spray painted in a lab test that simulates a Automotive OEM paint line. Results are shown in Table 2.

**Table 2**

| Example | A |
|---|---|
| | |
| Crystar® 3934 | 62.2 |
| Hostamont® NAV 101 | 0.4 |
| Irganox® 1010 | 0.3 |
| Licowax® PED521 | 0.2 |
| Polymer A | 10 |
| Nyglos® 4 | 20 |
| Plasthall® 809 | 3 |
| Americhem® 18589 R3 | 3.9 |
| | |
| Sag, mm | 33.08 |
| QMS DOI | 57.7 |

### Comparative Examples B-I

PET molding compositions without LCP were compounded rubber such as Polymer A is effective in increasing the dart impact with increasing rubber level in the composition, but also increases the heat sag with increasing rubber level. Non-grafting rubbers such as Polymers B and C are not (as) effective rubber tougheners and do not increase the heat sag as rubber level increases. Formulations and results are shown in Table 3.

**Table 3**

| Example | B | C | D | E | F | G | H | I |
|---|---|---|---|---|---|---|---|---|
| | | | | | | | | |
| Crystar® 3934 | 62.3 | 57.3 | 52.3 | 62.3 | 57.3 | 52.3 | 52.3 | 57.3 |
| Hostamont® NAV 101 | 0.4 | 0.4 | 0.4 | 0.4 | 0.4 | 0.4 | 0.4 | 0.4 |
| Teflon® TE9050 | 0.1 | 0.1 | 0.1 | 0.1 | 0.1 | 0.1 | 0.1 | 0.1 |
| Irganox® 1010 | 0.3 | 0.3 | 0.3 | 0.3 | 0.3 | 0.3 | 0.3 | 0.3 |
| Polymer A | 10 | 15 | 20 | | | | 10 | |
| Polymer B | | | | 10 | 15 | 20 | 10 | |
| Polymer C | | | | | | | | 15 |
| Nyglos® 4 | 20 | 20 | 20 | 20 | 20 | 20 | 20 | 20 |
| Uniplex® 810 | 3 | 3 | 3 | 3 | 3 | 3 | 3 | 3 |
| Americhem® 18589 R3 | 3.9 | 3.9 | 3.9 | 3.9 | 3.9 | 3.9 | 3.9 | 3.9 |
| | | | | | | | | |
| Sag, mm | 28.8 | 51.2 | 70.7 | 15.1 | 17 | 13.4 | 35 | 20.4 |
| Flexural Modulus, GPa | 2.5 | 1.45 | 1.14 | 4.41 | 4.05 | 4.28 | 1.6 | 2.92. |
| Total energy of break (Ceast), J | 3.59 | 7.35 | 8.64 | 2.36 | 1.93 | 2.49 | 3.29 | 2.03 |

### Example 5 and Comparative Example J

These compositions were prepared by Compounding Method A and injection molded by the standard procedure. The addition of 5% LCP5 to the formulation increases the elongation and decreases the heat sag in a toughened PET composition containing sodium Surlyn® as a sodium source. Compositions and results are shown in Table 4.

**Table 4**

| Example | J | 5 |
|---|---|---|
| | | |
| Crystar® 3934 | 62.7 | 57.7 |
| LCP5 | | 5 |
| Polymer D | 15 | 15 |
| Irganox® 1010 | 0.3 | 0.3 |
| Licowax® PED521 | 0.5 | 0.5 |
| Nyglos® 4 | 15 | 15 |
| Surlyn® 8920 | 3.5 | 3.5 |
| Plasthall® 809 | 3 | 3 |
| | | |
| Sag, mm | 20.49 | 16.85 |
| Tensile Strength, MPa | 39.6 | 35.4 |
| Elongation, % | 16.03 | 25.56 |
| Flex Modulus, GPa | 2.52 | 2.37 |

### Examples 6-9

In these examples the amount of glycidyl methacrylate in the toughener was varied. A wollastonite which was sized was also used. Compositions were made by Compounding Method A and test pieces were injection molded by the standard procedure. The compositions and their properties are shown in Table 5.

**Table 5**

| Example | 6 | 7 | 8 | 9 |
|---|---|---|---|---|
| | | | | |
| Crystar® 3934 | 61.2 | 61.2 | 61.2 | 61.2 |
| LCP5 | 5 | 5 | 5 | 5 |
| Polymer E | 15 | | | |
| Polymer F | | 15 | | |
| Polymer D | | | | 15 |
| Polymer G | | | 15 | |
| Irganox® 1010 | 0.3 | 0.3 | 0.3 | 0.3 |
| Licowax® PED521 | 0.5 | 0.5 | 0.5 | 0.5 |
| Nyglos® 4W 20544 | 15 | 15 | 15 | 15 |
| Plasthall® 809 | 3 | 3 | 3 | 3 |
| | | | | |
| Sag, mm | 15.21 | 14.6 | 14.76 | 14.12 |
| Tensile Strength, MPa | 42.4 | 43.1 | 48 | 44.7 |
| Elongation, % | 4.48 | 16.7 | 19.51 | 28.4 |
| Flex Modulus, GPa | 3.41 | 3.04 | 3.09 | 2.89 |
| Instrumented Impact, J | 5.6 | 5.02 | 6.12 | 10.45 |

### Examples 10-12 and Comparative Example K

The compositions was made by Compounding Method A, and moldings were made by the standard procedure. Compositions and physical properties are shown in Table 6.

**Table 6**

| Example | 10 | 11 | 12 | K |
|---|---|---|---|---|
| | | | | |
| Crystar® 3934 | 61.2 | 63.7 | 63.7 | 68.2 |
| LCP5 | 5 | 5 | 5 | 0 |
| Polymer D | 15 | 12.5 | 12.5 | 12.5 |
| Irganox® 1010 | 0.3 | 0.3 | 0.3 | 0.3 |
| Licowax® PED521 | 0.5 | 0.5 | 0.5 | 1 |
| Nyglos® 4 | | | 15 | 15 |
| Nyglos® 4W 20544 | 15 | 15 | | |
| Plasthall® 809 | 3 | 3 | 3 | 3 |
| | | | | |
| Sag, mm | 17.35 | 12.19 | 14.48 | 18.28 |
| Tensile Strength, MPa | 39.9 | 45.9 | 45.6 | 47.6 |
| Tensile Elongation, % | 48.18 | 38.34 | 36.37 | 46.1 |
| Flex Modulus, GPa | 2.41 | 3.04 | 3.00 | 3.00 |

### Examples 13-18

In these examples some of the PET present is replaced by other polyesters. Compositions were made by Compounding Method A and molded by the standard method, and the compositions and physical properties are shown in Table 7.

**Table 7**

| Example | 13 | 14 | 15 | 16 | 17 | 18 |
|---|---|---|---|---|---|---|
| | | | | | | |
| Crystar® 3934 | 68.2 | 63.2 | 58.2 | 48.2 | 53.2 | 51.2 |
| LCP5 | 3 | 3 | 3 | 3 | 3 | 5 |
| Hytrel® 5556 | | 5 | 10 | 20 | | |
| Polymer D | 15 | 15 | 15 | 15 | 15 | 15 |
| Crastin® 6155 | | | | | 10 | |
| Thermx® 13787 | | | | | | 10 |
| Irganox® 1010 | 0.3 | 0.3 | 0.3 | 0.3 | 0.3 | 0.3 |
| Licowax® PED521 | 0.5 | 0.5 | 0.5 | 0.5 | 0.5 | 0.5 |
| Nyglos® 4 | 10 | 10 | 10 | 10 | 15 | |
| Nyglos® 4W 20544 | | | | | | 15 |
| Plasthall® 809 | 3 | 3 | 3 | 3 | 3 | 3 |
| | | | | | | |
| Sag, mm | 20.4 | 22.16 | 31.8 | 37.14 | 21.73 | 17.7 |
| Tensile Strength, MPa | 41.0 | 34.9 | 3.60 | 27.9 | 36.6 | 42.8 |
| Elongation, % | 47.49 | 17.98 | 31.74 | 43.66 | 38.99 | 37.61 |
| Flex Modulus, GPa | 2.23 | 2.00 | 1.89 | 1.29 | 2.14 | 2.83 |
| Instrumented Impact, J | 29.45 | 7.3 | 28.42 | 29.96 | 22.41 | 10.99 |

### Examples 19-23 and Comparative Examples L-P

In all except one of these examples other polyesters were substituted for PET. Compositions were made by Compounding Method A and molded by the standard procedure, except in the extruder mixing barrel and die temperature settings were 300°C. Compositions and physical properties are shown in Table 8.

**Table 8**

| Example | 19 | 20 | L | 21^{a} | M^{a} | 22 | O | 23 | P |
|---|---|---|---|---|---|---|---|---|---|
| | | | | | | | | | |
| Crystar® 3934 | 61.2 | | | | | | | | |
| Thermx® 13787 | | 61.2 | 66.2 | | | | | | |
| LCP5 | 5 | 5 | | 5 | | 5 | | 5 | |
| PEN | | | | 61.2 | 66.2 | | | | |
| Polymer D | 15 | 15 | 15 | 15 | 15 | 15 | 15 | 15 | 15 |
| Crastin® 6129 | | | | | | | | 61.2 | 66.2 |
| 3GT | | | | | | 61.2 | 66.2 | | |
| Irganox® 1010 | 0.3 | 0.3 | 0.3 | 0.3 | 0.3 | 0.3 | 0.3 | 0.3 | 0.3 |
| Licowax® PED521 | 0.5 | 0.5 | 0.5 | 0.5 | 0.5 | 0.5 | 0.5 | 0.5 | 0.5 |
| Nyglos® 4W 20544 | 15 | 15 | 15 | 15 | 15 | 15 | 15 | 15 | 15 |
| Plasthall® 809 | 3 | 3 | 3 | 3 | 3 | 3 | 3 | 3 | 3 |
| | | | | | | | | | |
| Sag, mm | 20.22 | 11.73 | 13.19 | 94.87 | 106.37 | 19.06 | 11.97 | 23.48 | 18.68 |
| Tensile Strength, MPa | 42.1 | 43.2 | 47.8 | 44.7 | 47.7 | 45.6 | 47.1 | 37.3 | 39.8 |
| Tensile Elongation, % | 34.8 | 11.98 | 22.5 | 28.25 | 33.95 | 5.59 | 5.96 | 39.96 | 38.1 |
| Flex Modulus, GPa | 3.22 | 2.75 | 2.54 | 2.81 | 2.78 | 2.65 | 2.86 | 1.82 | 1.89 |
| Inst. Impact, Total Energy, J | 8.34 | 8.71 | 25.75 | 10.6 | 10.13 | 10.4 | 8.98 | 20.46 | 45.82 |

| | | | | | | | | | |
|---|---|---|---|---|---|---|---|---|---|
| ^{a} It is believed the PEN in this composition had little or no crystallinity after molding. | | | | | | | | | |

### Examples 24-26

In these examples the compositions were made by Compounding Method A, and the standard method for molding the compositions was used. Compositions and properties are shown in Table 9. These compositions have a somewhat lower heat resistance and so are useful for items such as appearance parts for appliances.

**Table 9**

| Example | 24 | 25 | 26 |
|---|---|---|---|
| | | | |
| Crystar® 3934 | 72.60 | 72.40 | 69.50 |
| Ultranox® 626 | 0.50 | 0.50 | |
| Hostamont® NAV101 | | 0.20 | 0.20 |
| Distearyl thiodipropionate | 0.50 | 0.50 | |
| LCP5 | 4.00 | 4.00 | 4.00 |
| Irganox® 1010 | 0.30 | 0.30 | 0.30 |
| Polymer A | 4.00 | 4.00 | 4.00 |
| Teflon® TE9050 | 0.10 | 0.10 | 0.10 |
| Americhem® 18589 R3 | | | 3.90 |
| | | | |
| | | | |
| Tensile strength, Mpa | 53.2 | 52.7 | 54.1 |
| Tensile elongation, % | 4.3 | 3.6 | 3.9 |
| Flexural modulus, GPa | 4.47 | 4.63 | 47.4 |
| Notched Izod, Nm/m | 31 | 30 | 32 |
| Unnotched Izod, Nm/m | 550 | 540 | 560 |

### Examples 27-37

This composition was made by Compounding Method B and injection molded by the standard procedure. Some of the lubricants ("Licowax®") were side fed (the "second mixing stage") and some were rear fed (the "first mixing stage"), and this is indicated in Table 10, which also shows the compositions and their properties.

**Table 10**

| Example | 27 | 28 | 29 | 30 | 31 | 32 | 33 | 34 | 35 | 36 | 37 |
|---|---|---|---|---|---|---|---|---|---|---|---|
| | | | | | | | | | | | |
| Crystar® 3934 | 64.2 | 63.7 | 63.7 | 63.7 | 63.7 | 63.7 | 63.7 | 61.2 | 61.2 | 63.7 | 63.7 |
| LCP5 | 5 | 5 | 5 | 5 | 5 | 5 | 5 | 5 | 5 | 5 | 5 |
| Polymer D | 12.5 | 12.5 | 12.5 | 12.5 | 12.5 | 12.5 | 12.5 | 15 | 15 | 12.5 | 12.5 |
| | | | | | | | | | | | |
| Rear Fed | | | | | | | | | | | |
| Licowax® PE 520 | | | | | 0.5 | 0.5 | 0.5 | 0.5 | 0.5 | | |
| Licowax® PED 521 | | | | | | | | | | 0.5 | 0.5 |
| | | | | | | | | | | | |
| Side Fed | | | | | | | | | | | |
| Licowax® PED 521 | | | | 0.5 | | | | | | | |
| Licowax® PE 520 | | 0.5 | 0.5 | | | | | | | | |
| | | | | | | | | | | | |
| Nyglos® 4 | 15 | 15 | 15 | 15 | 15 | 15 | 15 | 15 | 15 | 15 | 15 |
| Irganox® 1010 | 0.3 | 0.3 | 0.3 | 0.3 | 0.3 | 0.3 | 0.3 | 0.3 | 0.3 | 0.3 | 0.3 |
| Plasthall® 809 | 3 | 3 | 3 | 3 | 3 | 3 | 3 | 3 | 3 | 3 | 3 |
| | | | | | | | | | | | |
| Total | 100 | 100 | 100 | 100 | 100 | 100 | 100 | 100 | 100 | 100 | 100 |
| | | | | | | | | | | | |
| Extruder RPM | 250 | 250 | 300 | 250 | 250 | 175 | 300 | 250 | 300 | 250 | 300 |
| | | | | | | | | | | | |
| Sag, mm, As Molded | 19.98 | 14.68 | 11.86 | 21.84 | 23.38 | 19.41 | 19.03 | 17.05 | 19.97 | 19.13 | 18.02 |
| | | | | | | | | | | | |
| Tensile Strength, MPa | 44.4 | 42.7 | 42.8 | 41.5 | 43.4 | 43.9 | 45.6 | 39.3 | 41.7 | 41.3 | 41.4 |
| Elongation, % | 35.14 | 51.56 | 26.15 | 48.14 | 34.8 | 9.12 | 42.64 | 27.29 | 42.07 | 42.2 | 25.45 |
| Flex Modulus, GPa | 2.95 | 2.89 | 3.04 | 2.83 | 2.94 | 3.05 | 3.21 | 2.90 | 2.86 | 2.78 | 2.77 |
| Instrumented Impact, J | 18.14 | 30.29 | 31.69 | 31.34 | 20.76 | 12.23 | 31.98 | 22.05 | 38.85 | 17.81 | 14.75 |
| Peak Force, kg | 345 | 426 | 470 | 403 | 426 | 158 | 473 | 332 | 470 | 401 | 367 |

## Claims

1. A composition, comprising,
(a) at least about 40 weight percent of one or more isotropic polyester with a melting point (MP) of about 100°C or more;
(b) about 0.5 to about 20 weight percent of a liquid crystalline polymer whose melting point is at least 50°C higher than a cold crystallization point of said isotropic polyester, or if said isotropic polyester has no cold crystallization point said melting point of said liquid crystalline polymer is 150°C or higher;
(c) about 1.0 to about 35 weight percent of a reinforcing agent with an average aspect ratio of about 2.0 or more, and whose average longest dimension is about 20 µm or less; and
(d) about 3 to about 30 weight percent of a polymeric toughening agent which contains functional groups reactive with said isotropic polyester;
wherein all percents by weight are based on the total of all ingredients in said composition.

2. The composition as recited in claim 1 wherein said isotropic polyester consists essentially of repeat units derived from one or more of terephthalic acid, isophthalic acid and 2,6-naphthalene dicarboxylic acid, and one or more of HO(CH₂)ₙOH (I), 1, 4 -cyclohexanedimethanol , HO (CH₂CH₂O)ₘCH₂CH₂OH (II), and HO(CH₂CH₂CH₂CH₂O)_{z}CH₂CH₂CH₂CH₂OH (III), wherein n is an integer of 2 to 10, m on average is 1 to 4, and z is an average of about 7 to about 40.

3. The composition as recited in each of the previous claims wherein said isotropic polyester is poly(ethylene terephthalate) .

4. The composition as recited in each of the previous claims wherein said reinforcing agent has an average aspect ratio of about 3.0 or more, and has an average maximum dimension of about 10 µm or less.

5. The composition as recited in each of the previous claims wherein said reinforcing agent is wollastonite, talc or potassium titanate whiskers.

6. The composition as recited in each of the previous claims wherein said reinforcing agent is about 5 to about 20 weight percent of said composition, and said liquid crystalline polymer is about 2.0 to about 10 weight percent of said composition.

7. The composition as recited in each of the previous claims wherein said polymeric toughening agent contains epoxy or carboxylic anhydride functional groups.

8. The composition as recited in each of the previous claims wherein said polymeric toughener contains about 1.0 to about 15 weight percent of one or more monomers containing functional groups.

9. The composition as recited in each of the previous claims additionally comprising one or more of an epoxy compound or resin, or a lubricant.

10. A process for the manufacture of a composition, comprising,
(a) at least about 40 weight percent of one or more isotropic polyester with a melting point (MP) of about 100°C or more;
(b) about 0.5 to about 20 weight percent of a liquid crystalline polymer whose melting point is at least 50°C higher than a cold crystallization point of said isotropic polyester, or if said isotropic polyester has no cold crystallization point said melting point of said liquid crystalline polymer is 150°C or higher;
(c) about 1.0 to about 35 weight percent of a reinforcing agent with an average aspect ratio of about 2.0 or more, and whose average longest dimension is about 20 µm or less; and
(d) about 3 to about 30 weight percent of a polymeric toughening agent which contains functional groups reactive with said isotropic polyester;
wherein all percents by weight are based on the total of all ingredients in said composition;
and wherein said composition additionally comprises at least one or more active ingredients containing functional groups reactive with the functional groups of the polymeric toughening agent and optionally one or more inactive ingredients;
comprising:
(a') in a first mixing step mixing materials comprising said isotropic polyester and said polymeric toughening agent to form an intermediate composition; and then
(b') in one or more subsequent mixing steps mixing materials comprising said intermediate composition, and said one or more active ingredients; and
provided that each of said one or more inactive ingredients are initially mixed in said first mixing step, or one or more of said subsequent mixing steps.

11. The process as recited in claim 10 wherein said isotropic polyester consists essentially of repeat units derived from one or more of terephthalic acid, isophthalic acid and 2,6-naphthalene dicarboxylic acid, and one or more of HO(CH₂)ₙOH (I), 1,4-cyclohexanedimethanol, HO (CH₂CH₂O)ₘCH₂CH₂OH (II), and HO (CH₂CH₂CH₂CH₂O)_{z}CH₂CH₂CH₂CH₂OH (III), wherein n is an integer of 2 to 10, m on average is 1 to 4, and z is an average of about 7 to about 40.

12. The process as recited in any one of claims 10-11 wherein said isotropic polyester is poly(ethylene terephthalate).

13. The process as recited in any one of claims 10-12 wherein said liquid crystalline polymer has a melting point of about 300°C or more, and is about 2.0 to about 10 weight percent of said composition, and said reinforcing agent has an average aspect ratio of about 3.0 or more, and an average maximum dimension of about 10 µm or less.

14. The process as recited in any one of claims 10-13 wherein said polymeric toughening agent contains epoxy functional groups.

15. An appearance part comprising the composition of any one of claims 1-9.

16. The appearance part as recited in claim 15 which is an automotive body panel, an interior automotive panel, an appliance part, a power tool housing, electronic cabinet or housing, an exterior or interior panel for a vehicle, a decorative interior panel for a building, a piece of furniture, or a telephone or other telephone equipment.

17. The appearance part as recited in claims 15 or 16 which is pigmented.

18. An automobile, truck, snowmobile, construction vehicle, or farm equipment vehicle, comprising the composition of any one of claims 1-10.

19. The automobile, truck, snowmobile, construction vehicle, or farm equipment vehicle as recited in claim 18, wherein said composition is coated.

20. A process for coating substrates assembled from metal parts and at least one plastic part, with visible metal and plastic surfaces, comprising the successive steps of:
(1) electrodeposition coating the substrates, removing non-deposited electrodeposition coating agent from the substrate and thermally cross-linking the deposited electrodeposition coating and thereby forming an electrodeposition coating primer on the metal surfaces; and
(2) application and curing of at least one additional coating at least on all the visible metal and plastic surfaces;
provided that at least some of the plastic parts make up the visible plastic surfaces of the substrate, and at least some of the plastic parts have a composition which comprises:
(a) at least about 40 weight percent of at least one isotropic polyester with a melting point of about 100°C or more;
(b) about 0.5 to about 20 weight percent of a liquid crystalline polymer having a melting point that is at least 50°C higher than a cold crystallization point of said isotropic polyester, or if said isotropic polyester has no cold crystallization point said melting point of said liquid crystalline polymer is 150°C or higher;
(c) about 1.0 to about 35 weight percent of a reinforcing agent with an average aspect ratio of about 2.0 or more, and whose average longest dimension is 20 µm or less; and
(d) about 3 to about 30 weight percent of a polymeric toughening agent which contains functional groups reactive with said isotropic polyester;
wherein all percents by weight are based on the total of all ingredients in the composition.

21. A process for coating substrates assembled from metal parts and at least one plastic part, with visible metal and plastic surfaces, comprising, electrodeposition coating the substrates, removing non-deposited electrodeposition coating agent from the substrate and thermally cross-linking the deposited electrodeposition coating and thereby forming an electrodeposition coating primer on the metal surfaces;
and provided that at least some of the plastic parts make up the visible plastic surfaces of the substrate, and at least some of the plastic parts have a composition which comprises:
(a) at least about 40 weight percent of at least one isotropic polyester with a melting point of about 100°C or more;
(b) about 0.5 to about 20 weight percent of a liquid crystalline polymer having a melting point that is at least 50°C higher than a cold crystallization point of said isotropic polyester, or if said isotropic polyester has no cold crystallization point said melting point of said liquid crystalline polymer is 150°C or higher;
(c) about 1.0 to about 35 weight percent of a reinforcing agent with an average aspect ratio of about 2.0 or more, and whose average longest dimension is 20 µm or less; and
(d) about 3 to about 30 weight percent of a polymeric toughening agent which contains functional groups reactive with said isotropic polyester;
wherein all percents by weight are based on the total of all ingredients in the composition.

22. A process for coating substrates assembled from metal parts and at least one plastic part, with visible metal and plastic surfaces, comprising application and curing of at least one coating at least on all the visible metal and plastic surfaces; provided that at least some of the plastic parts make up the visible plastic surfaces of the substrate, and at least some of the plastic parts have a composition which comprises:
(a) at least about 40 weight percent of at least one isotropic polyester with a melting point of about 100°C or more;
(b) about 0.5 to about 20 weight percent of a liquid crystalline polymer having a melting point that is at least 50°C higher than a cold crystallization point of said isotropic polyester, or if said isotropic polyester has no cold crystallization point said melting point of said liquid crystalline polymer is 150°C or higher;
(c) about 1.0 to about 35 weight percent of a reinforcing agent with an average aspect ratio of about 2.0 or more, and whose average longest dimension is 20 µm or less; and
(d) about 3 to about 30 weight percent of a polymeric toughening agent which contains functional groups reactive with said isotropic polyester;
wherein all percents by weight are based on the total of all ingredients in the composition.

23. The process of claim 20, 21 or 22, wherein the substrates are car bodies.

24. Coated substrates which are coated according to the process of claim 20, 21 or 22.

25. A vehicle manufactured according to a method which comprises the process of claim 20, 21 or 22.

## Patentansprüche

1. Zusammensetzung, welche umfasst:
(a) mindestens etwa 40 Gewichtsprozent von einem oder von mehreren isotropen Polyestern mit einem Schmelzpunkt (MP = melting point) von etwa 100°C oder mehr;
(b) etwa 0,5 bis etwa 20 Gewichtsprozent von einem flüssigen, kristallinen Polymer, dessen Schmelzpunkt mindestens 50°C höher liegt als ein kalter Kristallisationspunkt des isotropen Polyesters, oder falls der isotrope Polyester keinen kalten Kristallisationspunkt aufweist, liegt der Schmelzpunkt des flüssigen, kristallinen Polymers bei 150°C oder höher;
(c) etwa 1,0 bis etwa 35 Gewichtsprozent eines Verstärkungsmittels mit einem durchschnittlichen Aspektverhältnis von etwa 2,0 oder mehr und mit einer durchschnittlichen längsten Dimension desselben von etwa 20 µm oder weniger; und
(d) etwa 3 bis etwa 30 Gewichtsprozent eines polymeren Zähigkeitsvermittlers, der funktionale Gruppen enthält, welche mit dem isotropen Polyester reaktiv sind;
wobei alle Gewichtsprozentangaben auf die Gesamtheit aller Ingredienzien in der besagten Zusammensetzung bezogen sind.

2. Zusammensetzung gemäß Anspruch 1, bei welcher der isotrope Polyester im Wesentlichen aus Wiederholungseinheiten besteht, welche abgeleitet sind von einer oder von mehreren der Terephthalsäure, Isophthalsäure und 2,6-Naphthalendicarboxylsäure und von einem oder von mehreren des HO(CH₂)ₙOH (I), 1,4-Cyclohexandimethanols, HO(CH₂CH₂O)ₘCH₂CH₂OH (II) und HO(CH₂CH₂CH₂CH₂O)_{z}CH₂CH₂CH₂CH₂OH (III), wobei n eine ganze Zahl zwischen 2 und 10 darstellt, m im Durchschnitt einen Wert zwischen 1 und 4 besitzt und z im Durchschnitt zwischen etwa 7 bis etwa 40 liegt.

3. Zusammensetzung gemäß einem jeden der vorhergehenden Ansprüche, bei welcher der isotrope Polyester aus Poly(ethylenterephthalat) besteht.

4. Zusammensetzung gemäß einem jeden der vorhergehenden Ansprüche, bei welcher das Verstärkungsmittel ein durchschnittliches Aspektverhältnis von etwa 3,0 oder mehr aufweist und eine durchschnittliche Maximaldimension von etwa 10 µm oder weniger besitzt

5. Zusammensetzung gemäß einem jeden der vorhergehenden Ansprüche, bei welcher das Verstärkungsmittel aus Wollastonit, Talk oder Kaliumtitanatwhiskern besteht.

6. Zusammensetzung gemäß einem jeden der vorhergehenden Ansprüche, bei welcher das Verstärkungsmittel aus etwa 5 bis etwa 20 Gewichtsprozent der Zusammensetzung besteht und wobei das flüssige, kristalline Polymer etwa 2,0 bis etwa 10 Gewichtsprozent der Zusammensetzung ausmacht.

7. Zusammensetzung gemäß einem jeden der vorhergehenden Ansprüche, bei welcher der polymere Zähigkeitsvermittler funktionale Epoxy- oder Carboxylanhydridgruppen enthält.

8. Zusammensetzung gemäß einem jeden der vorhergehenden Ansprüche, bei welcher der polymere Zähigkeitsvermittler etwa 1,0 bis etwa 15 Gewichtsprozent von einem oder von mehreren Monomeren enthält, welche funktionale Gruppen aufweisen.

9. Zusammensetzung gemäß einem jeden der vorhergehenden Ansprüche, welche zusätzlich eine oder mehrere von einer Epoxyverbindung oder einem Epoxyharz oder von einem Schmiermittel umfasst.

10. Verfahren zur Herstellung einer Zusammensetzung, welche umfasst:
(a) mindestens etwa 40 Gewichtsprozent von einem oder von mehreren isotropen Polyestern mit einem Schmelzpunkt MP von etwa 100°C oder mehr;
(b) etwa 0,5 bis etwa 20 Gewichtsprozent von einem flüssigen, kristallinen Polymer, dessen Schmelzpunkt mindestens 50°C höher liegt als ein kalter Kristallisationspunkt des isotropen Polyesters oder falls der isotrope Polyester keinen kalten Kristallisationspunkt aufweist, liegt der Schmelzpunkt des flüssigen, kristallinen Polymers bei 150°C oder höher;
(c) etwa 1,0 bis etwa 35 Gewichtsprozent eines Verstärkungsmittels mit einem durchschnittlichen Aspektverhältnis von etwa 2,0 oder mehr und mit einer durchschnittlichen längsten Dimension desselben von etwa 20 µm oder weniger; und
(d) etwa 3 bis etwa 30 Gewichtsprozent eines polymeren Zähigkeitsvermittlers, der funktionale Gruppen enthält, welche mit dem isotropen Polyester reaktiv sind;
wobei alle Gewichtsprozentangaben auf die Gesamtheit aller Ingredienzien in der Zusammensetzung bezogen sind;
und wobei die Zusammensetzung zusätzlich mindestens ein oder mehrere aktive Ingredienzien umfasst, die funktionale Gruppen enthalten, welche mit den funktionalen Gruppen des polymeren Zähigkeitsvermittlers reaktiv sind, und wahlweise ein oder mehrere inaktive Ingredienzien;
umfassend:
(a') in einem ersten Mischschritt ein Mischen der Materialien, die den isotropen Polyester und den polymeren Zähigkeitsvermittler umfassen, um eine Zwischenzusammensetzung zu bilden; und daraufhin
(b') in einem oder mehreren nachfolgenden Mischschritten ein Mischen der Materialien, die die Zwischenzusammensetzung und ein oder mehrere aktive Ingredienzien umfassen; und
vorausgesetzt, dass ein jedes des einen oder der mehreren inaktiven Ingredienzien anfänglich in dem ersten Mischschritt oder in einem oder in mehreren der nachfolgenden Mischschritte zugemischt wird.

11. Verfahren gemäß Anspruch 10, bei welchem der isotrope Polyester im Wesentlichen aus Wiederholungseinheiten besteht, die abgeleitet sind von einer oder von mehreren der Terephthalsäure, Isophthalsäure und 2,6-Naphthalendicarboxylsäure und von einer oder von mehreren des HO(CH₂)ₙOH (I), 1,4-Cyclohexandimethanols, HO(CH₂CH₂O)ₘCH₂CH₂OH (II) und HO(CH₂CH₂CH₂CH₂O)_{z}CH₂CH₂CH₂CH₂OH (III), wobei n eine ganze Zahl zwischen 2 und 10 darstellt, m im Durchschnitt einen Wert zwischen 1 und 4 besitzt und z im Durchschnitt zwischen etwa 7 bis etwa 40 liegt.

12. Verfahren gemäß irgendeinem der Ansprüche 10-11, bei welchem der isotrope Polyester aus einem Poly(ethylenterephthalat) besteht.

13. Verfahren gemäß irgendeinem der Ansprüche 10-12, bei welchem das flüssige, kristalline Polymer einen Schmelzpunkt von etwa 300°C oder höher aufweist und bei welchem dasselbe etwa 2,0 bis etwa 10 Gewichtsprozent der Zusammensetzung ausmacht und bei welchem das Verstärkungsmittel ein durchschnittliches Aspektverhältnis von etwa 3,0 oder mehr aufweist und eine durchschnittliche Maximaldimension von etwa 10 µm oder weniger besitzt.

14. Verfahren gemäß irgendeinem der Ansprüche 10-13, bei welchem der polymere Zähigkeitsvermittler funktionale Epoxygruppen enthält.

15. Sichtbarer Teil, der die Zusammensetzung gemäß irgendeinem der Ansprüche 1-9 umfasst.

16. Sichtbarer Teil gemäß Anspruch 15, welcher darstellt ein Karosseriepaneel für ein Kraftfahrzeug, ein inneres Paneel für ein Kraftfahrzeug, ein Ausrüstungsteil, ein Kraftwerkzeuggehäuse, einen Schrank oder ein Gehäuse für Elektronik, ein äußeres oder inneres Paneel für ein Fahrzeug, ein dekoratives inneres Paneel für ein Gebäude, ein Möbelstück oder ein Telefon oder eine andere Telefonausstattung.

17. Sichtbarer Teil gemäß Anspruch 15 oder 16, welcher pigmentiert ist.

18. Automobil, Lastwagen, Schneemobil, Baufahrzeug oder landwirtschaftliches Fahrzeug, welche die Zusammensetzung gemäß irgendeinem der Ansprüche 1-10 umfassen.

19. Automobil, Lastwagen, Schneemobil, Baufahrzeug oder landwirtschaftliches Fahrzeug gemäß Anspruch 18, bei welchen die Zusammensetzung eine Beschichtung trägt.

20. Verfahren zum Beschichten von Substraten, die aus Metallteilen und aus mindestens einem Plastikteil zusammengebaut sind, mit sichtbaren Metall- und Plastikoberflächen, wobei das Verfahren die folgenden Schritte umfasst:
(1) ein Beschichten der Substrate durch Elektroablagerung, ein Entfernen des nicht bei der Elektroablagerung abgelagerten Beschichtungsmittels von dem Substrat und ein thermisches Vernetzen der durch Elektroablagerung abgelagerten Beschichtung und dadurch ein Bereitstellen eines durch Elektroablagerung aufgetragenen Beschichtungsprimers auf den Metalloberflächen; und
(2) ein Auftragen und Härten von mindestens einer zusätzlichen Beschichtung auf mindestens allen sichtbaren Metall- und Plastikoberflächen;
vorausgesetzt, dass mindestens einige der Plastikteile die sichtbaren Plastikoberflächen des Substrats darstellen und dass mindestens einige der Plastikteile eine Zusammensetzung aufweisen, die umfasst:
(a) mindestens etwa 40 Gewichtsprozent von mindestens einem isotropen Polyester mit einem Schmelzpunkt von etwa 100°C oder mehr;
(b) etwa 0,5 bis etwa 20 Gewichtsprozent von einem flüssigen, kristallinen Polymer mit einem Schmelzpunkt, der mindestens 50°C höher liegt als ein kalter Kristallisationspunkt des isotropen Polyesters, oder falls der isotrope Polyester keinen kalten Kristallisationspunkt aufweist, liegt der Schmelzpunkt des flüssigen, kristallinen Polymers bei 150°C oder höher;
(c) etwa 1,0 bis etwa 35 Gewichtsprozent eines Verstärkungsmittels mit einem durchschnittlichen Aspektverhältnis von etwa 2,0 oder mehr und mit einer durchschnittlichen längsten Dimension desselben von etwa 20 µm oder weniger; und
(d) etwa 3 bis etwa 30 Gewichtsprozent eines polymeren Zähigkeitsvermittlers, der funktionale Gruppen enthält, welche mit dem isotropen Polyester reaktiv sind;
wobei alle Gewichtsprozentangaben auf die Gesamtheit aller Ingredienzien in der Zusammensetzung bezogen sind.

21. Verfahren zum Beschichten von Substraten, die aus Metallteilen und aus mindestens einem Plastikteil mit sichtbaren Metall- und Plastikoberflächen zusammengebaut sind, wobei das Verfahren umfasst; ein Beschichten der Substrate durch Elektroablagerung, ein Entfernen des nicht bei der Elektroablagerung abgelagerten Beschichtungsmittels von dem Substrat und ein thermisches Vernetzen der durch Elektroablagerung abgelagerten Beschichtung und dadurch ein Bereitstellen eines durch Elektroablagerung aufgetragenen Beschichtungsprimers auf den Metalloberflächen; und vorausgesetzt, dass mindestens einige der Plastikteile die sichtbaren Plastikoberflächen des Substrats darstellen und dass mindestens einige der Plastikteile eine Zusammensetzung aufweisen, die umfasst:
(a) mindestens etwa 40 Gewichtsprozent von mindestens einem isotropen Polyester mit einem Schmelzpunkt von etwa 100°C oder mehr;
(b) etwa 0,5 bis etwa 20 Gewichtsprozent von einem flüssigen, kristallinen Polymer mit einem Schmelzpunkt, der mindestens 50°C höher liegt als ein kalter Kristallisationspunkt des isotropen Polyesters, oder falls der isotrope Polyester keinen kalten Kristallisationspunkt aufweist, liegt der Schmelzpunkt des flüssigen, kristallinen Polymers bei 150°C oder höher;
(c) etwa 1,0 bis etwa 35 Gewichtsprozent eines Verstärkungsmittels mit einem durchschnittlichen Aspektverhältnis von etwa 2,0 oder mehr und mit einer durchschnittlichen längsten Dimension desselben von etwa 20 µm oder weniger; und
(d) etwa 3 bis etwa 30 Gewichtsprozent eines polymeren Zähigkeitsvermittlers, der funktionale Gruppen enthält, welche mit dem isotropen Polyester reaktiv sind;
wobei alle Gewichtsprozentangaben auf die Gesamtheit aller Ingredienzien in der Zusammensetzung bezogen sind.

22. Verfahren zum Beschichten von Substraten, die aus Metallteilen und aus mindestens einem Plastikteil mit sichtbaren Metall- und Plastikoberflächen zusammengebaut sind, wobei das Verfahren ein Auftragen und Härten von mindestens einer Beschichtung mindestens auf allen sichtbaren Metall- und Plastikoberflächen umfasst; vorausgesetzt, dass mindestens einige der Plastikteile die sichtbaren Plastikoberflächen des Substrats ausmachen und dass mindestens einige der Plastikteile eine Zusammensetzung aufweisen, die umfasst:
(a) mindestens etwa 40 Gewichtsprozent von mindestens einem isotropen Polyester mit einem Schmelzpunkt von etwa 100°C oder mehr;
(b) etwa 0,5 bis etwa 20 Gewichtsprozent von einem flüssigen, kristallinen Polymer mit einem Schmelzpunkt, der mindestens 50°C höher liegt als ein kalter Kristallisationspunkt des isotropen Polyesters, oder dass dann, wenn der isotrope Polyester keinen kalten Kristallisationspunkt aufweist, der Schmelzpunkt des flüssigen, kristallinen Polymers bei 150°C oder höher liegt;
(c) etwa 1,0 bis etwa 35 Gewichtsprozent eines Verstärkungsmittels mit einem durchschnittlichen Aspektverhältnis von etwa 2,0 oder mehr und mit einer durchschnittlichen längsten Dimension desselben von etwa 20 µm oder weniger; und
(d) etwa 3 bis etwa 30 Gewichtsprozent eines polymeren Zähigkeitsvermittlers, der funktionale Gruppen enthält, welche mit dem isotropen Polyester reaktiv sind;
wobei alle Gewichtsprozentangaben auf die Gesamtheit aller Ingredienzien in der Zusammensetzung bezogen sind.

23. Verfahren gemäß den Ansprüchen 20, 21 oder 22, bei welchem die Substrate aus Autokarosserien bestehen.

24. Beschichtete Substrate, die entsprechend dem Verfahren gemäß den Ansprüchen 20, 21 oder 22 beschichtet werden.

25. Fahrzeug, das entsprechend einem Verfahren hergestellt wird, welches das Verfahren gemäß den Ansprüchen 20, 21 oder 22 umfasst.

## Revendications

1. Composition, comprenant:
a) au moins environ 40 pour-cent en poids d'un ou de plusieurs polyesters isotropes avec un point de fusion (MP) d'environ 100°C ou plus;
b) d'environ 0,5 à environ 20 pour-cent en poids d'un polymère à cristaux liquides dont le point de fusion est au moins 50°C supérieur à un point de cristallisation à froid dudit polyester isotrope ou, si ledit polyester isotrope ne possède pas de point de cristallisation à froid, ledit point de fusion dudit polymère à cristaux liquides est de 150°C ou plus;
c) d'environ 1,0 à environ 35 pour-cent en poids d'un agent de renforcement avec un rapport de forme moyen d'environ 2,0 ou plus et dont la dimension la plus longue moyenne est d'environ 20 µm ou moins; et
d) d'environ 3 à environ 30 pour-cent en poids d'un agent de durcissement polymère qui contient des groupes fonctionnels réactifs avec ledit polyester isotrope;
dans laquelle tous les pourcentages en poids sont basés sur le total de tous les ingrédients dans ladite composition.

2. Composition suivant la revendication 1, dans laquelle ledit polyester isotrope est constitué essentiellement d'unités de répétition dérivées d'un ou de plusieurs parmi l'acide téréphtalique, l'acide isophtalique et l'acide 2,6-naphtalènedicarboxylique, et d'un ou de plusieurs parmi HO(CH₂)ₙOH (I), 1,4-cyclohexanediméthanol, HO(CH₂CH₂O)ₘCH₂CH₂OH (II) et HO(CH₂CH₂CH₂CH₂O)_{z}CH₂CH₂CH₂CH₂OH (III), où n est un nombre entier de 2 à 10, m en moyenne est de 1 à 4, et z est une moyenne d'environ 7 à environ 40.

3. Composition suivant chacune des revendications précédentes, dans laquelle ledit polyester isotrope est un poly(éthylène téréphtalate).

4. Composition suivant chacune des revendications précédentes, dans laquelle ledit agent de renforcement possède un rapport de forme moyen d'environ 3,0 ou plus et possède une dimension maximum moyenne d'environ 10 µm ou moins.

5. Composition suivant chacune des revendications précédentes, dans laquelle ledit agent de renforcement est des trichites de wollastonite, de talc ou de titanate de potassium.

6. Composition suivant chacune des revendications précédentes, dans laquelle ledit agent de renforcement est d'environ 5 à environ 20 pour-cent en poids de ladite composition et ledit polymère à cristaux liquides est d'environ 2,0 à environ 10 pour-cent en poids de ladite composition.

7. Composition suivant chacune des revendications précédentes, dans laquelle ledit agent de durcissement polymère contient des groupes fonctionnels époxy ou d'anhydride carboxylique.

8. Composition suivant chacune des revendications précédentes, dans laquelle ledit durcissant polymère contient d'environ 1,0 à environ 15 pour-cent en poids d'un ou de plusieurs monomères contenant des groupes fonctionnels.

9. Composition suivant chacune des revendications précédentes, comprenant en outre un ou plusieurs parmi un composé ou une résine époxy, ou un lubrifiant.

10. Procédé pour la fabrication d'une composition, comprenant:
a) au moins environ 40 pour-cent en poids d'un ou de plusieurs polyesters isotropes avec un point de fusion (MP) d'environ 100°C ou plus;
b) d'environ 0,5 à environ 20 pour-cent en poids d'un polymère à cristaux liquides dont le point de fusion est au moins 50°C supérieur à un point de cristallisation à froid dudit polyester isotrope ou, si ledit polyester isotrope ne possède pas de point de cristallisation à froid, ledit point de fusion dudit polymère à cristaux liquides est de 150°C ou plus;
c) d'environ 1,0 à environ 35 pour-cent en poids d'un agent de renforcement avec un rapport de forme moyen d'environ 2,0 ou plus et dont la dimension la plus longue moyenne est d'environ 20 µm ou moins; et
d) d'environ 3 à environ 30 pour-cent en poids d'un agent de durcissement polymère qui contient des groupes fonctionnels réactifs avec ledit polyester isotrope;
dans laquelle tous les pourcentages en poids sont basés sur le total de tous les ingrédients dans ladite composition;
et où ladite composition comprend en outre au moins un ou plusieurs ingrédients actifs contenant des groupes fonctionnels réactifs avec les groupes fonctionnels de l'agent de durcissement polymère et éventuellement un ou plusieurs ingrédients inactifs;
comprenant:
a') dans une première étape de mélange, le mélange de matériaux comprenant ledit polyester isotrope et ledit agent de durcissement polymère pour former une composition intermédiaire; et ensuite
b') dans une ou plusieurs étapes de mélange subséquentes, le mélange de matériaux comprenant ladite composition intermédiaire et lesdits un ou plusieurs ingrédients actifs; et
à condition que chacun desdits un ou plusieurs ingrédients actifs soit initialement mélangé dans ladite première étape de mélange ou une ou plusieurs desdites étapes de mélange subséquentes.

11. Procédé suivant la revendication 10, dans lequel ledit polyester isotrope est constitué essentiellement d'unités de répétition dérivées d'un ou de plusieurs parmi l'acide téréphtalique, l'acide isophtalique et l'acide 2,6-naphtalènedicarboxylique, et d'un ou de plusieurs parmi HO(CH₂)ₙOH (I), 1,4-cyclohexanediméthanol, HO(CH₂CH₂O)ₘCH₂CH₂OH (II) et HO(CH₂CH₂CH₂CH₂O)_{z}CH₂CH₂CH₂CH₂OH (III), où n est un nombre entier de 2 à 10, m en moyenne est de 1 à 4, et z est une moyenne d'environ 7 à environ 40.

12. Procédé suivant l'une quelconque des revendications 10-11, dans lequel ledit polyester isotrope est un poly(éthylène téréphtalate).

13. Procédé suivant l'une quelconque des revendications 10-12, dans lequel ledit polymère à cristaux liquides possède un point de fusion d'environ 300°C ou plus et il est d'environ 2,0 à environ 10 pour-cent en poids de ladite composition et ledit agent de renforcement possède un rapport de forme moyen d'environ 3,0 ou plus et une dimension maximum moyenne d'environ 10 µm ou moins.

14. Procédé suivant l'une quelconque des revendications 10-13, dans lequel ledit agent de durcissement polymère contient des groupes fonctionnels époxy.

15. Pièce d'apparence comprenant la composition suivant l'une quelconque des revendications 1-9.

16. Pièce d'apparence suivant la revendication 15, qui est un panneau de carrosserie automobile, un panneau automobile intérieur, une pièce d'appareil ménager, un boîtier d'outil mécanique, une armoire ou un boîtier électronique, un panneau extérieur ou intérieur pour un véhicule, un panneau intérieur décoratif pour un bâtiment, une pièce de meuble ou un téléphone ou un autre équipement de téléphone.

17. Pièce d'apparence suivant la revendication 15 ou 16, qui est pigmentée.

18. Automobile, camion, autoneige, véhicule de construction ou véhicule d'équipement agricole, comprenant la composition suivant l'une quelconque des revendications 1-10.

19. Automobile, camion, autoneige, véhicule de construction ou véhicule d'équipement agricole suivant la revendication 18, où ladite composition est revêtue.

20. Procédé pour le revêtement de substrats assemblés à partir de pièces métalliques et d'au moins une pièce plastique, avec des surfaces métalliques et plastiques visibles, comprenant les étapes successives:
1) de revêtement par électrodéposition des substrats, de retrait de l'agent de revêtement par électrodéposition non déposé à partir du substrat et de réticulation thermique du revêtement par électrodéposition déposé et de formation de cette manière d'une couche de fond de revêtement par électrodéposition sur les surfaces métalliques; et
2) d'application et de durcissement d'au moins un revêtement supplémentaire sur au moins toutes les surfaces métalliques et plastiques visibles;
à condition que au moins une partie des pièces plastiques constitue les surfaces plastiques visibles du substrat et au moins une partie des pièces plastiques possède une composition qui comprend:
a) au moins environ 40 pour-cent en poids d'au moins un polyester isotrope avec un point de fusion d'environ 100°C ou plus;
b) d'environ 0,5 à environ 20 pour-cent en poids d'un polymère à cristaux liquides possédant un point de fusion qui est au moins 50°C supérieur à un point de cristallisation à froid dudit polyester isotrope ou, si ledit polyester isotrope ne possède pas de point de cristallisation à froid, ledit point de fusion dudit polymère à cristaux liquides est de 150°C ou plus;
c) d'environ 1,0 à environ 35 pour-cent en poids d'un agent de renforcement avec un rapport de forme moyen d'environ 2,0 ou plus et dont la dimension la plus longue moyenne est d'environ 20 µm ou moins; et
d) d'environ 3 à environ 30 pour-cent en poids d'un agent de durcissement polymère qui contient des groupes fonctionnels réactifs avec ledit polyester isotrope;
dans laquelle tous les pourcentages en poids sont basés sur le total de tous les ingrédients dans la composition.

21. Procédé pour le revêtement de substrats assemblés à partir de pièces métalliques et d'au moins une pièce plastique, avec des surfaces métalliques et plastiques visibles, comprenant le revêtement par électrodéposition des substrats, le retrait de l'agent de revêtement par électrodéposition non déposé à partir du substrat et la réticulation thermique du revêtement par électrodéposition déposé et la formation de cette manière d'une couche de fond de revêtement par électrodéposition sur les surfaces métalliques;
et à condition que au moins une partie des pièces plastiques constitue les surfaces plastiques visibles du substrat et au moins une partie des pièces plastiques possède une composition qui comprend:
a) au moins environ 40 pour-cent en poids d'au moins un polyester isotrope avec un point de fusion d'environ 100°C ou plus;
b) d'environ 0,5 à environ 20 pour-cent en poids d'un polymère à cristaux liquides possédant un point de fusion qui est au moins 50°C supérieur à un point de cristallisation à froid dudit polyester isotrope ou, si ledit polyester isotrope ne possède pas de point de cristallisation à froid, ledit point de fusion dudit polymère à cristaux liquides est de 150°C ou plus;
c) d'environ 1,0 à environ 35 pour-cent en poids d'un agent de renforcement avec un rapport de forme moyen d'environ 2,0 ou plus et dont la dimension la plus longue moyenne est d'environ 20 µm ou moins; et
d) d'environ 3 à environ 30 pour-cent en poids d'un agent de durcissement polymère qui contient des groupes fonctionnels réactifs avec ledit polyester isotrope;
dans laquelle tous les pourcentages en poids sont basés sur le total de tous les ingrédients dans la composition.

22. Procédé pour le revêtement de substrats assemblés à partir de pièces métalliques et d'au moins une pièce plastique, avec des surfaces métalliques et plastiques visibles, comprenant l'application et le durcissement d'au moins un revêtement sur au moins toutes les surfaces métalliques et plastiques visibles;
à condition que au moins une partie des pièces plastiques constitue les surfaces plastiques visibles du substrat et au moins une partie des pièces plastiques possède une composition qui comprend:
a) au moins environ 40 pour-cent en poids d'au moins un polyester isotrope avec un point de fusion d'environ 100°C ou plus;
b) d'environ 0,5 à environ 20 pour-cent en poids d'un polymère à cristaux liquides possédant un point de fusion qui est au moins 50°C supérieur à un point de cristallisation à froid dudit polyester isotrope ou, si ledit polyester isotrope ne possède pas de point de cristallisation à froid, ledit point de fusion dudit polymère à cristaux liquides est de 150°C ou plus;
c) d'environ 1,0 à environ 35 pour-cent en poids d'un agent de renforcement avec un rapport de forme moyen d'environ 2,0 ou plus et dont la dimension la plus longue moyenne est d'environ 20 µm ou moins; et
d) d'environ 3 à environ 30 pour-cent en poids d'un agent de durcissement polymère qui contient des groupes fonctionnels réactifs avec ledit polyester isotrope;
dans laquelle tous les pourcentages en poids sont basés sur le total de tous les ingrédients dans la composition.

23. Procédé suivant la revendication 20, 21 ou 22, dans lequel les substrats sont des carrosseries de voitures.

24. Substrats revêtus qui sont revêtus suivant le procédé de la revendication 20, 21 ou 22.

25. Véhicule fabriqué suivant une méthode qui comprend le procédé suivant la revendication 20, 21 ou 22.
